(19) Europäisches Patentamt
European Patent Office
Office européen des brevets

(11) **EP 4 432 653 B1**

(12) **EUROPEAN PATENT SPECIFICATION**

(45) Date of publication and mention
of the grant of the patent:
**08.04.2026 Bulletin 2026/15**

(21) Application number: **24163851.9**

(22) Date of filing: **15.03.2024**

(51) International Patent Classification (IPC):
*H04N 9/31* (2006.01)    *G02B 26/10* (2006.01)

(52) Cooperative Patent Classification (CPC):
**H04N 9/3129; G02B 26/10; G02B 26/101;
G02B 26/108; H04N 9/3105; H04N 9/3108;
H04N 9/3141**

(54) **LIGHT SOURCE DEVICE AND PROJECTOR**

LICHTQUELLENVORRICHTUNG UND PROJEKTOR

DISPOSITIF DE SOURCE DE LUMIÈRE ET PROJECTEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.03.2023 JP 2023043613**

(43) Date of publication of application:
**18.09.2024 Bulletin 2024/38**

(73) Proprietor: **Seiko Epson Corporation
Tokyo 160-8801 (JP)**

(72) Inventor: **YONEYAMA, Takuo
Suwa-shi 392-8502 (JP)**

(74) Representative: **Lewis Silkin LLP
Arbor
255 Blackfriars Road
London SE1 9AX (GB)**

(56) References cited:
**WO-A2-2009/007901      GB-A- 784 144
US-A- 2 222 937       US-A1- 2007 252 918
US-A1- 2016 334 637**

## EP 4 432 653 B1

**Description**

BACKGROUND

1. Technical Field

The present disclosure relates to a light source device and a projector.

2. Related Art

As a light source device to be used in a projector, there has been proposed a light source device for illuminating a light modulation device such as a liquid crystal panel by temporally scanning the light modulation device with light emitted from a light emitter.

In JP-A-2007-225956 (Document 1), there is disclosed a projector provided with a light source device including a light source lamp, a liquid crystal light valve, a polygon mirror disposed between the light source device and the liquid crystal light valve, and a projection lens. In this projector, the light source device emits light having an elliptical flux sectional shape. The polygon mirror reflects the light emitted from the light source device to thereby scan an image forming area of the liquid crystal light valve in a short axis direction of the elliptical flux sectional shape.

However, when using the polygon mirror for the scanning with the light as in the projector of Document 1, even when making completely parallel light enter the polygon mirror, the parallelism of the light is impaired by the polygon mirror. Specifically, since the polygon mirror reflects the light while rotating, an incident angle of the light with respect to a reflecting surface of the polygon mirror temporally changes, and the parallel light having entered the polygon mirror turns to light having a predetermined divergence angle to illuminate the liquid crystal light valve. As a result, there is a possibility that a variety of problems related to the image quality of the projector such as degradation of luminance or contrast in the liquid crystal light valve, an occurrence of color unevenness, and a loss of light in the projection lens occur. Therefore, there is desired a light source device capable of stably emitting light high in parallelism.

US 2222937 discloses a scanning apparatus including: a source of light, a multi-sided light transparent prism, means for producing a narrow light beam from said source and directing the same against said prism in a direction substantially normal to the axis thereof for transmission therethrough, means whereby said prism may be rotated about its axis, and a second multi-sided light-transparent prism. The second prism may be positioned with its axis at an angle to the axis of the first prism. The apparatus also has means for directing the light transmitted by the first prism against the said second prism in a direction substantially normal to the axis thereof for transmission therethrough, and means adapted for rotating said second prism at a speed different from the speed of rotation of the first prism. The beam of light after passing through both prisms will be deflected in different directions and at different rates by reason of light refraction caused by the prisms.

GB 784144 A, WO 2009/007901 A2, US 2007/252918 A1 and US 2016/334637 A1 are also relevant.

SUMMARY

In view of the problems described above, a light source device according to the invention is defined in claim 1.

A projector according to the invention includes the light source device described above, a light modulation device configured to modulate the light emitted from the light source device in accordance with image information, and a projection optical device configured to project the light modulated by the light modulation device.

BRIEF DESCRIPTION OF THE DRAWINGS

FIG. 1 is a perspective view of a light source device according to a first embodiment.
FIG. 2A is a schematic diagram illustrating a behavior of a light beam when a transmissive optical part rotates.
FIG. 2B is a schematic diagram showing a behavior following the behavior shown in FIG. 2A.
FIG. 2C is a schematic diagram showing a behavior following the behavior shown in FIG. 2B.
FIG. 2D is a schematic diagram showing a behavior following the behavior shown in FIG. 2C.
FIG. 2E is a schematic diagram showing a behavior following the behavior shown in FIG. 2D.
FIG. 2F is a schematic diagram showing a behavior following the behavior shown in FIG. 2E.
FIG. 3 is a schematic diagram showing the transmissive optical part as a model of a simulation.
FIG. 4A is a graph showing a relationship between a rotational angle and a displacement when the refractive index of the transmissive optical part is 1.5.

FIG. 4B is a graph showing the relationship between the rotational angle and the displacement when the refractive index of the transmissive optical part is 1.75.

FIG. 4C is a graph showing the relationship between the rotational angle and the displacement when the refractive index of the transmissive optical part is 2.0.

FIG. 4D is a graph showing the relationship between the rotational angle and the displacement when the refractive index of the transmissive optical part is 2.5.

FIG. 4E is a graph showing the relationship between the rotational angle and the displacement when the refractive index of the transmissive optical part is 3.0.

FIG. 5 is a schematic diagram showing a relationship between the transmissive optical part and a refractive index of light.

FIG. 6 is a graph showing a relationship between an incident angle $\theta_1$ of a light beam to the transmissive optical part and an angle $\theta_2'$ between an optical axis and the light beam.

FIG. 7A is a diagram showing an illuminance distribution of light emitted from a light emitter.

FIG. 7B is a diagram showing loci of a light beam emitted from a second transmissive optical part, and is a diagram showing when an interval between the loci is wide.

FIG. 8A is a diagram showing an illuminance distribution of the light emitted from the light emitter.

FIG. 8B is a diagram showing loci of the light beam emitted from the second transmissive optical part, and is a diagram showing when the interval between the loci is narrow.

FIG. 8C is a diagram showing an illuminance distribution of the light on an illumination target surface, and is a diagram showing when an interval of scanning lines is narrow.

FIG. 9A is a diagram showing the illuminance distribution of the light when the refractive indexes of the two transmissive optical parts are relatively low.

FIG. 9B is a diagram showing the illuminance distribution of the light when the refractive indexes of the two transmissive optical parts are relatively high.

FIG. 10 is a schematic diagram showing a relationship between a transmissive optical part shaped like a hexagonal column and a displacement of the light.

FIG. 11 is a schematic diagram showing a relationship between a shape and a maximum incident angle of the transmissive optical part.

FIG. 12A is a diagram showing loci of a light beam, and is a diagram showing when the refractive index of the transmissive optical part is 1.492, and the shape of the transmissive optical part is a regular quadrangular prism.

FIG. 12B is a diagram showing loci of the light beam, and is a diagram showing when the refractive index of the transmissive optical part is 2.5, and the shape of the transmissive optical part is a regular quadrangular prism.

FIG. 12C is a diagram showing loci of the light beam, and is a diagram showing when the refractive index of the transmissive optical part is 1.492, and the shape of the transmissive optical part is a regular hexagonal column.

FIG. 12D is a diagram showing loci of the light beam, and is a diagram showing when the refractive index of the transmissive optical part is 1.492, and the shape of the transmissive optical part is a regular octagonal column.

FIG. 13 is a diagram showing a relationship between an illuminance distribution and a propagation distance of light.

FIG. 14 is a schematic configuration diagram of a projector according to a second embodiment.

FIG. 15 is a front view of a light modulation device.

FIG. 16 is a schematic configuration diagram of a projector according to a third embodiment.

FIG. 17 is a schematic configuration diagram of a projector according to a fourth embodiment.

FIG. 18 is a schematic configuration diagram of a projector according to a fifth embodiment.

DESCRIPTION OF EMBODIMENTS

First Embodiment

A first embodiment of the present disclosure will hereinafter be described using the drawings.

A light source device according to the present embodiment is an example of a light source device using a laser diode as a light emitter.

In the drawings described below, elements are shown with respective dimensional scale ratios different from each other in some cases in order to make the elements eye-friendly.

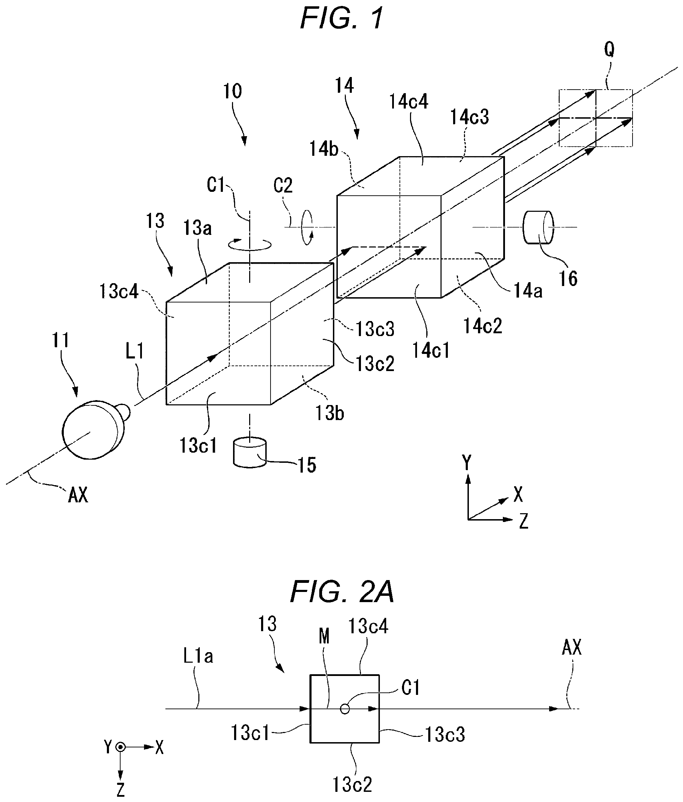

FIG. 1 is a perspective view showing a schematic configuration of the light source device 10 according to the present embodiment.

As shown in FIG. 1, the light source device 10 according to the present embodiment is provided with a first light emitter 11, a first transmissive optical part 13, a second transmissive optical part 14, a first rotary drive device 15, and a second rotary drive device 16.

Hereinafter, in the drawings, the explanation will be presented using an XYZ orthogonal coordinate system as needed. The X axis is an axis parallel to an optical axis of the first light emitter 11. The optical axis AX of the first light emitter 11 is defined as an axis extending along a principal ray of a first light beam L1 emitted from the first light emitter 11. The Y axis is an axis perpendicular to the X axis, and is an axis extending along a first rotational axis C1 of the first transmissive optical part 13. The Z axis is an axis perpendicular to the X axis and the Y axis, and is an axis extending along a second rotational axis C2 of the second transmissive optical part 14.

The X-axis direction in the present embodiment corresponds to a first direction in the appended claims. The Y-axis direction in the present embodiment corresponds to a second direction in the appended claims. The Z-axis direction in the present embodiment corresponds to a third direction in the appended claims.

The first light emitter 11 emits the first light beam L1 in a first wavelength band toward the first transmissive optical part 13. The first light emitter 11 is formed of a laser diode. Therefore, the first light beam L1 to be emitted from the first light emitter 11 is linearly-polarized light having coherence, and is a light beam narrow in flux width, and high in parallelism. The first wavelength band is only required to be within a range of a visible wavelength band, but is not particularly limited.

The first transmissive optical part 13 is disposed between the first light emitter 11 and the second transmissive optical part 14 on the optical axis AX of the first light emitter 11. The first transmissive optical part 13 is formed of a light transmissive member rotatably supported. The first transmissive optical part 13 is made rotatable centering on a first rotational axis C1 extending along the Y-axis direction. The first rotational axis C1 is coupled to the first rotary drive device 15 formed of a motor or the like. The first transmissive optical part 13 rotates centering on the first rotational axis C1 due to the drive by the first rotary drive device 15.

As a glass material of the light transmissive member constituting the first transmissive optical part 13, there is used a light transmissive material such as optical glass such as BK7, quartz, or resin. The first transmissive optical part 13 has a first surface 13a and a second surface 13b crossing the first rotational axis C1, and four first side surfaces 13c1, 13c2, 13c3 and 13c4 having perpendicular contact with the first surface 13a and the second surface 13b. In other words, the shape of the first transmissive optical part 13 is a regular quadrangular prism having six planes including the first surface 13a, the second surface 13b, and the four first side surfaces 13c1, 13c2, 13c3, and 13c4. The cross-sectional shape of the first transmissive optical part 13 cut by a plane perpendicular to the first rotational axis C1 is a square. In other words, the four first side surfaces 13c1, 13c2, 13c3, and 13c4 have the areas the same as each other, and the two first side surfaces opposed to each other are parallel to each other.

The first transmissive optical part 13 transmits the first light beam L1 emitted from the first light emitter 11 while rotating centering on the first rotational axis C1. Therefore, the first side surface through which the first light beam L1 emitted from the first light emitter 11 enters the first transmissive optical part 13 is not uniquely fixed, but changes according to time. Similarly, the first side surface from which the first light beam L1 having entered the first transmissive optical part 13 is emitted to an external space is not uniquely fixed, but changes according to time. In the first transmissive optical part 13, the first surface through which the first light beam L1 emitted from the first light emitter 11 enters the first transmissive optical part 13 is referred to as a first plane of incidence. The first side surface from which the first light beam L1 having entered the first transmissive optical part 13 through the first plane of incidence is emitted is referred to as a first exit surface. In this case, the first plane of incidence and the first exit surface change according to time, and are any of pairs of first side surfaces parallel to each other out of the four first side surfaces 13c1, 13c2, 13c3, and 13c4.

In the present specification, when describing that the two surfaces of the transmissive optical part are parallel to each other, there is described as "parallel" when an angle between the two surfaces is within a range of 0±5 degrees taking a processing accuracy of the glass material forming the light transmissive member, an allowable range of the parallelism of the light, and so on into consideration.

In the case of the present embodiment, the first transmissive optical part 13 has the four first side surfaces 13c1, 13c2, 13c3, and 13c4, but the number of the first side surfaces is not necessarily required to be four, and is desirably 2×m (m is a natural number no smaller than 2). In other words, it is desirable for the number of the first side surfaces to be an even number such as six or eight. When the number of the first side surfaces is an even number, each of all of the first side surfaces becomes parallel to the first side surface opposed to that first side surface, and the first side surface which is not parallel to any of the first side surfaces does not exist. Thus, the occurrence of stray light in the first transmissive optical part 13 is little, and thus, it is possible to increase the light use efficiency.

The second transmissive optical part 14 is disposed at the light exit side of the first transmissive optical part 13 on the optical axis AX of the first light emitter 11. The second transmissive optical part 14 is formed of a light transmissive member rotatably supported. The second transmissive optical part 14 is made rotatable centering on a second rotational axis C2 extending along the Z-axis direction. Specifically, the first rotational axis C1 and the second rotational axis C2 extend in respective directions perpendicular to each other in an imaginary plane perpendicular to the optical axis AX. The second rotational axis C2 is coupled to the second rotary drive device 16 formed of a motor or the like. The second transmissive optical part 14 rotates centering on the second rotational axis C2 due to the drive by the second rotary drive device 16.

The light transmissive member constituting the second transmissive optical part 14 is substantially the same as the light transmissive member constituting the first transmissive optical part 13. As a glass material of the light transmissive member, there is used a light transmissive material such as optical glass such as BK7, quartz, or resin. In particular, in the case of the second transmissive optical part 14, unlike the first transmissive optical part 13, since the first light beam L1 with which scanning has been performed in a single direction by the first transmissive optical part 13 enters the second transmissive optical part 14, the light density is lower than that of the first light beam L1 at the time point when the first light beam L1 enters the first transmissive optical part 13. Therefore, the possibility that a resin material low in light resistance and heat resistance can be used is higher than that in the first transmissive optical part 13.

The second transmissive optical part 14 has a third surface 14a and a fourth surface 14b crossing the second rotational axis C2, and four second side surfaces 14c1, 14c2, 14c3, and 14c4 having perpendicular contact with the third surface 14a and the fourth surface 14b. In other words, the shape of the second transmissive optical part 14 is a regular quadrangular prism having six planes including the third surface 14a, the fourth surface 14b, and the four second side surfaces 14c1, 14c2, 14c3, and 14c4. The cross-sectional shape of the second transmissive optical part 14 cut by a plane perpendicular to the second rotational axis C2 is a square. In other words, the four second side surfaces 14c1, 14c2, 14c3, and 14c4 have the areas the same as each other, and the two second side surfaces opposed to each other are parallel to each other.

The second transmissive optical part 14 transmits the first light beam L1 emitted from the first transmissive optical part 13 while rotating centering on the second rotational axis C2. Therefore, the second side surface through which the first light beam L1 emitted from the first transmissive optical part 13 enters the second transmissive optical part 14 is not uniquely fixed, but changes according to time. Similarly, the second side surface from which the first light beam L1 having entered the second transmissive optical part 14 is emitted to the external space is not uniquely fixed, but changes according to time. In the second transmissive optical part 14, the second side surface through which the first light beam L1 emitted from the first transmissive optical part 13 enters the second transmissive optical part 14 is referred to as a second plane of incidence. The second side surface from which the first light beam L1 having entered the second transmissive optical part 14 through the second plane of incidence is emitted is referred to as a second exit surface. In this case, the second plane of incidence and the second exit surface change according to time, and are any of pairs of second side surfaces parallel to each other out of the four second side surfaces 14c1, 14c2, 14c3, and 14c4.

In the case of the present embodiment, the second transmissive optical part 14 has the four second side surfaces 14c1, 14c2, 14c3, and 14c4, but the number of the second side surfaces is not necessarily required to be four, and is desirably $2 \times n$ (n is a natural number no smaller than 2). In other words, it is desirable for the number of the second side surfaces to be an even number such as six or eight. When the number of the second side surfaces is an even number, each of all of the second side surfaces becomes parallel to the second side surface opposed to that second side surface, and the second side surface which is not parallel to any of the second side surfaces does not exist. Thus, the occurrence of stray light in the second transmissive optical part 14 is little, and thus, it is possible to increase the light use efficiency.

In the present embodiment, the first transmissive optical part 13 and the second transmissive optical part 14 both have a regular quadrangular prismatic shape, but it is possible for the first transmissive optical part 13 and the second transmissive optical part 14 to have respective shapes different from each other as long as the first transmissive optical part 13 and the second transmissive optical part 14 each have a plane of incidence and an exit surface parallel to each other.

In FIG. 1, the first transmissive optical part 13 is shown to have the same size as the size of the second transmissive optical part 14, but it is possible to make the length of a side in the Y-axis direction smaller than the length of sides in the X-axis direction and the Z-axis direction since the first transmissive optical part 13 performs scanning in the Z-axis direction with the first light beam L1 but does not perform scanning in the Y-axis direction as described later. In other words, it is possible for the first transmissive optical part 13 to have a rectangular solid shape shorter in sides in the X-axis direction and the Z-axis direction than in a side in the Y-axis direction instead of a shape approximate to a cubic shape shown in FIG. 1. Thus, it is possible to achieve a reduction in thickness of the first transmissive optical part 13. In that case, the dimension of the second transmissive optical part 14 becomes larger than the dimension of the first transmissive optical part 13, but as described above, in the second transmissive optical part 14, since the light density of the incident light is low, it is possible to use the resin material. When using the resin material as the glass material of the light transmissive member, since the second transmissive optical part 14 becomes light in weight, it is possible to achieve a reduction in size of the second rotary drive device 16.

At least one of the first transmissive optical part 13 and the second transmissive optical part 14 can be formed of quartz. In the first transmissive optical part 13 and the second transmissive optical part 14, as an amount of light transmitted through the light transmissive member increases, an amount of light absorbed by the light transmissive member also increases, and a thermal strain occurs in the light transmissive member in some cases. In this case, the polarization directions of the first light beam L1 emitted from the first light emitter 11 is disturbed, and the linearly-polarized light having entered the light transmissive member turns to elliptically-polarized light and is then emitted from the light transmissive member. As a result, when applying the light source device 10 to the projector, it becomes unachievable to obtain an advantage that it is possible to obtain predetermined contrast without being provided with an incidence side polarization plate by using a laser diode as the first light emitter 11. In other words, despite the laser diode is used for the first light emitter 11, there occurs a necessity of using the incidence side polarization plate for uniforming the polarization direction.

Therefore, in order to obtain the advantage described above, it is desirable to use the glass material low in Young's modulus and thermal expansion coefficient as the glass material small in thermal strain, and it is desirable to use quartz as an example.

A behavior of the first light beam L1 when the first light beam L1 is transmitted through the first transmissive optical part 13 and the second transmissive optical part 14 will hereinafter be described. It should be noted that the action of the first transmissive optical part 13 and the action of the second transmissive optical part 14 are substantially the same as each other, and are different only in direction from each other, and therefore, only the first transmissive optical part 13 will hereinafter be illustrated and described.

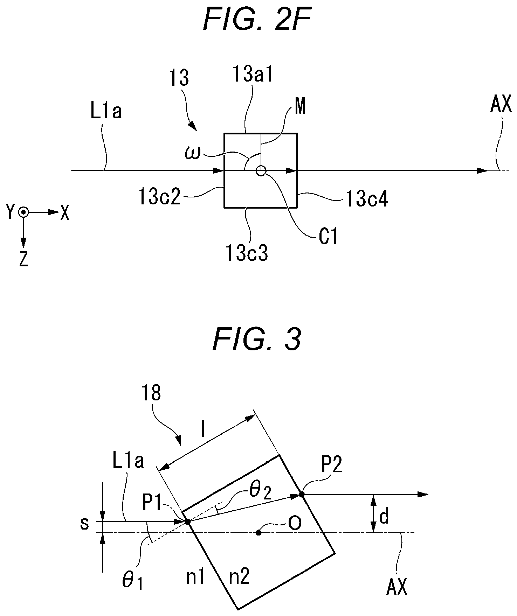

FIG. 2A through FIG. 2F are schematic diagrams illustrating the behavior of the first light beam L1 when the first transmissive optical part 13 rotates. In this example, there is shown a state in which the first transmissive optical part 13 rotates clockwise centering on the first rotational axis C1 when viewed from the +Y side, and the time passes from FIG. 2A toward FIG. 2F.

In FIG. 2A through FIG. 2F, an angle between the optical axis AX and a straight line M which passes through the first rotational axis C1 and is perpendicular to the first side surface 13c1 of the first transmissive optical part 13 is defined as a rotational angle $\omega$. Further, in reality, the first light beam L1 has a predetermined flux width in the Z-axis direction, but here, the consideration is made focusing attention on the behavior of the light beam L1a proceeding on the optical axis AX.

FIG. 2A shows an initial state of the first transmissive optical part 13. Specifically, the first transmissive optical part 13 does not rotate, the straight line M and the optical axis AX overlap each other, and the rotational angle $\omega$ is 0 degree. In this case, the light beam L1a perpendicularly enters the first side surface 13c1, and therefore, proceeds through the first transmissive optical part 13 along the optical axis AX without being refracted on the first side surface 13c1. Then, the light beam L1a also perpendicularly enters the first side surface 13c3 parallel to the first side surface 13c1. Therefore, the light beam is emitted from the first transmissive optical part 13, and then proceeds on the optical axis AX without being refracted on the first side surface 13c3.

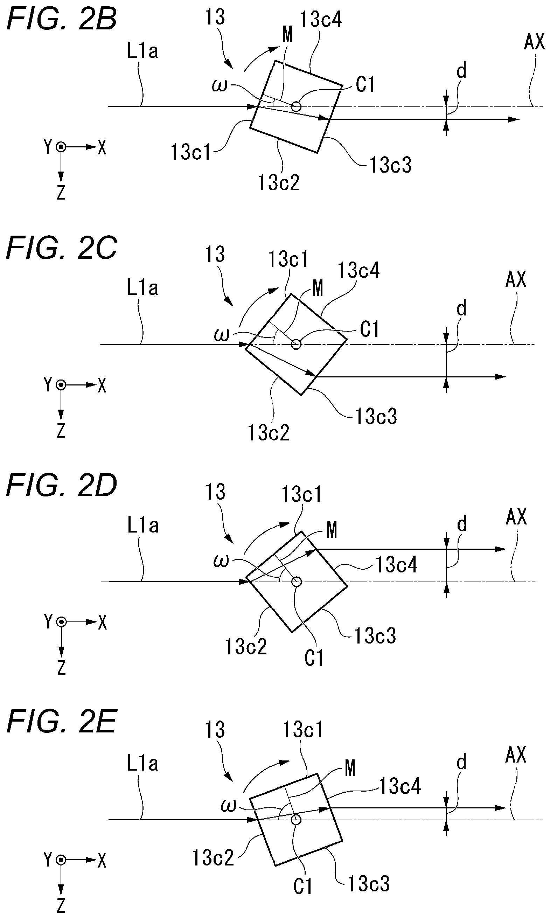

Then, as shown in FIG. 2B, when the first transmissive optical part 13 rotates by the rotational angle $\omega$, the light beam L1a enters the side surface 14c1 at the incident angle equal to the rotational angle $\omega$. Therefore, the light beam L1a is refracted toward the direction (the +Z side) shown in the drawing, and then proceeds through the first transmissive optical part 13. Then, the light beam L1a also enters the first side surface 13c3 at the predetermined incident angle, and is therefore refracted on the first side surface 13c3, and is then emitted from the first transmissive optical part 13. On this occasion, since the first side surface 13c1 and the side surface 13c3 are parallel to each other, the incident angle of the light beam L1a with respect to the first side surface 13c1 and the incident angle of the light beam L1a with respect to the first side surface 13c3 are equal to each other, and the refraction angle of the light beam L1a entering the first side surface 13c1 and the refraction angle of the light beam L1a emitted from the first side surface 13c3 become equal in absolute value to each other and opposite in sign from each other. Thus, the refraction angle when the light beam L1a enters the first side surface 13c1 and the refraction angle when the light beam L1a is emitted from the first side surface 13c3 are canceled out. As a result, the light beam L1a proceeds in parallel to the optical axis AX at a position displaced from the optical axis AX toward the +Z side as much as a displacement d.

Then, as shown in FIG. 2C, when the rotational angle $\omega$ of the first transmissive optical part 13 becomes larger than that shown in FIG. 2B, the incident angle of the light beam L1a becomes larger, and the refraction angle becomes larger. Therefore, the displacement d of the light beam L1a from the optical axis AX becomes larger than that shown in FIG. 2B. Further, the state in which the light beam L1a proceeds in parallel to the optical axis AX is always maintained. When the rotational angle $\omega$ is in a range from 0 degree to 45 degrees, the displacement d increases monotonically in accordance with an increase in the rotational angle $\omega$.

Then, as shown in FIG. 2D, when the rotational angle $\omega$ of the first transmissive optical part 13 exceeds 45 degrees, the plane of incidence of the light beam L1a changes from the first side surface 13c1 to the first side surface 13c2. On this occasion, the light beam L1a is refracted on the first side surface 13c2, but the refraction direction changes from that in the period shown in FIG. 2C and the antecedent drawings, and the light beam L1a is refracted toward the direction (the -Z side) shown in the drawing. Further, although the exit surface of the light beam L1a also changes from the first side surface 13c3 to the first side surface 13c4, since the first side surface 13c2 and the first side surface 13c4 are parallel to each other, the relationship that the refraction angle when the light beam L1a enters the first side surface 13c3 and the refraction angle when the light beam L1a is emitted from the first side surface 13c4 are canceled out does not change from that relationship in the period shown in FIG. 2C and the antecedent drawings. As a result, the light beam L1a proceeds in parallel to the optical axis AX at a position displaced from the optical axis AX toward the -Z side as much as the displacement d.

Then, as shown in FIG. 2E, when the rotational angle $\omega$ of the first transmissive optical part 13 becomes larger than that shown in FIG. 2D, the incident angle of the light beam L1a becomes smaller, and the refraction angle becomes smaller. Therefore, the displacement d of the light beam L1a from the optical axis AX becomes smaller than that shown in FIG. 2D. As described above, when the rotational angle $\omega$ is in a range from 45 degrees to 90 degrees, the displacement d decreases monotonically in accordance with an increase in the rotational angle $\omega$.

Then, as shown in FIG. 2F, when the rotational angle ω of the first transmissive optical part 13 becomes 90 degrees, the plane of incidence changes from the first side surface 13c1 in the initial state to the first side surface 13c2, but the behavior of the light beam L1a becomes the same as that shown in FIG. 2A.

As described above, as long as the first plane of incidence and the first exit surface of the first transmissive optical part 13 are parallel to each other, there is no chance for the proceeding direction of the light beam L1a to change, and the light beam L1a is translated in a direction parallel to the optical axis AX as time passes irrespective of the rotational angle ω of the first transmissive optical part 13. When the rotational angle ω is 0 degree, the displacement d of the light beam L1a is 0, and when the rotational angle ω is in a range from 0 degree to 45 degrees, the displacement d increases toward either one of the +Z side and the -Z side. At the moment when the rotational angle ω exceeds 45 degrees, the direction of the displacement is reversed while keeping the absolute value of the displacement d, and when the rotational angle ω is in the range from 45 degrees to 90 degrees, the displacement d decreases, and when the rotational angle ω becomes 90 degrees, the displacement d vanishes. The behavior described above is repeated after the rotational angle ω exceeds 90 degrees. Therefore, when the first transmissive optical part 13 makes one revolution, the displacement d of the light beam L1a repeats the cycle described above four times. The displacement of the light beam L1a can freely be set by controlling parameters such as the refractive index and the size of the first transmissive optical part 13.

Although only the displacement in one direction by the first transmissive optical part 13 is hereinabove described, the light source device 10 is provided with the first transmissive optical part 13 and the second transmissive optical part 14 having respective rotational axes perpendicular to each other. Therefore, the first light beam L1 is displaced toward the two directions perpendicular to each other as time passes. Specifically, as shown in FIG. 1, the scanning with the first light beam L1 emitted from the first light emitter 11 is performed by the first transmissive optical part 13 in the Z-axis direction, and the scanning with the first light beam L1 is performed by the second transmissive optical part 14 in the Y-axis direction perpendicular to the Z-axis direction. In other words, the first transmissive optical part 13 and the second transmissive optical part 14 perform the scanning with the first light beam L1 in an illumination target area Q as a two-dimensional area in the illumination target surface.

The Z-axis direction in the present embodiment corresponds to a first scanning direction in the appended claims. The Y-axis direction in the present embodiment corresponds to a second scanning direction in the appended claims.

Advantages of First Embodiment

The light source device 10 according to the present embodiment is provided with the first light emitter 11 for emitting the first light beam L1, the first transmissive optical part 13 which is formed of the light transmissive member rotatably supported, and which has the first plane of incidence which the first light beam L1 emitted from the first light emitter 11 enters, and the first exit surface for emitting the first light beam L1 entering the first transmissive optical part 13 through the first plane of incidence, and the second transmissive optical part 14 which is formed of the light transmissive member rotatably supported, and which has the second plane of incidence which the first light beam L1 emitted from the first transmissive optical part 13 enters, and the second exit surface for emitting the first light beam entering the second transmissive optical part 14 through the second plane of incidence. The first transmissive optical part 13 is made rotatable centering on the first rotational axis C1 extending along the Y-axis direction crossing the X-axis direction as the incident direction of the first light beam L1 to the first transmissive optical part 13. The second transmissive optical part 14 is made rotatable centering on the second rotational axis C2 extending along the Z-axis direction crossing the X-axis direction and the Y-axis direction. The first plane of incidence and the first exit surface are parallel to each other, and the second plane of incidence and the second exit surface are parallel to each other.

When using a polygon mirror as a device for performing scanning with a light beam as in the related-art light source device, since the polygon mirror reflects the light beam while rotating, the incident angle of the light beam entering the illumination target surface changes with time from moment to moment. Therefore, even when the light beam to be made to enter the polygon mirror is a parallel light beam, the light beam emitted from the polygon mirror becomes a diverging light beam, and therefore, it is extremely difficult to make the light beam always perpendicularly enter the illumination target surface. Therefore, in the related-art projector provided with the polygon mirror, there is a possibility that the degradation of the brightness and the contrast and occurrence of the color unevenness in the light modulation device, a loss of light in the projection optical device, and so on occur to degrade the image quality of the projector.

To cope with the problems described above, according to the light source device 10 related to the present embodiment, as shown in FIG. 2A through FIG. 2F, the first light beam L1 is displaced toward the direction perpendicular to the proceeding direction of the first light beam L1 while keeping the state parallel to the optical axis AX of the first light emitter 11 according to the rotation of the first transmissive optical part 13 and the second transmissive optical part 14. Further, by providing the first transmissive optical part 13 and the second transmissive optical part 14 having the respective rotational axes C1, C2 perpendicular to each other, it is possible to perform the scanning with the first light beam L1 in the illumination target area Q as the two-dimensional area in the arbitrary illumination target surface. Thus, when adopting the light source device 10 according to the present embodiment in the projector, it is possible to make the first light beam L1 always perpendicularly enter the light modulation device. Thus, it is possible to realize the projector in which the degradation of the brightness and the contrast, and the occurrence of the color unevenness in the light modulation device, the loss of light in the projection optical device, and so on are suppressed, and which is excellent in display quality.

Simulation Related to Various Parameters of Transmissive Optical part

The inventors of the present disclosure have conducted a simulation for studying how the variety of parameters of the transmissive optical part such as a refractive index and a shape affect the illumination characteristics. The result of the simulation will hereinafter be described.

FIG. 3 is a schematic diagram showing the transmissive optical part 18 to be a model of the simulation.

As shown in FIG. 3, the transmissive optical part 18 has a square cross-sectional shape perpendicular to a rotational axis O, and has four side surfaces similarly to the embodiment described above. The length l of each side of the square is assumed as 20 mm. The light beam L1a proceeds in parallel to the optical axis AX, enters the transmissive optical part 18 at a point P1 at the incident angle $\theta_1$, and is refracted at the refraction angle $\theta_2$, then emitted at a point P2 from the transmissive optical part 18, and proceeds in parallel to the optical axis AX. As the light beam L1a, there are assumed a light beam proceeding on the optical axis AX, and a light beam proceeding at a position distant from the optical axis AX by a distance s. Specifically, as the distance s (mm), there are set five types of -4, -2, 0, +2, and +4. In other words, in the simulation, there are set five light beams at intervals of 2 mm.

The refractive index n1 of the external space (air) of the transmissive optical part 18 is set to 1.0, and the refractive index n2 of the transmissive optical part 18 is changed to five types of 1.5, 1.75, 2.0, 2.5, and 3.0 to perform the simulation related to a correlative relationship between the rotational angle of the transmissive optical part 18 and the displacement d.

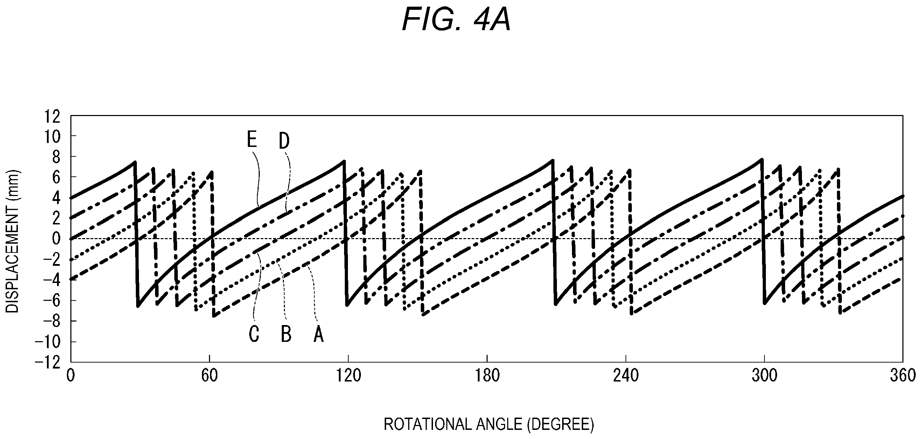

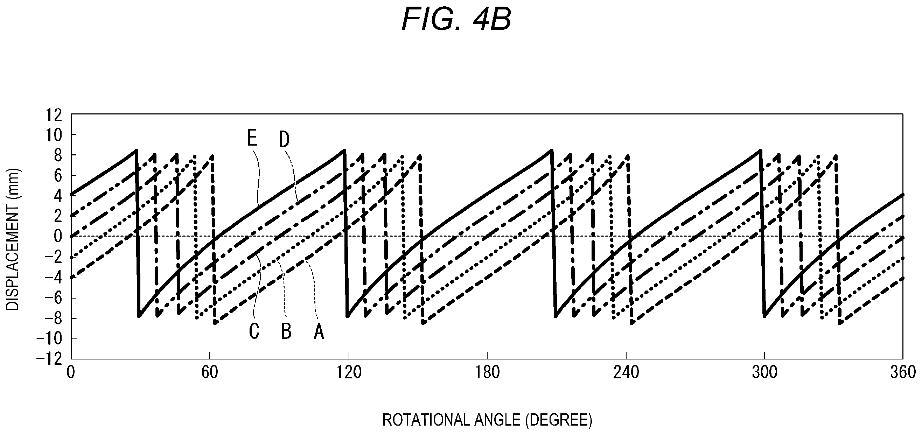

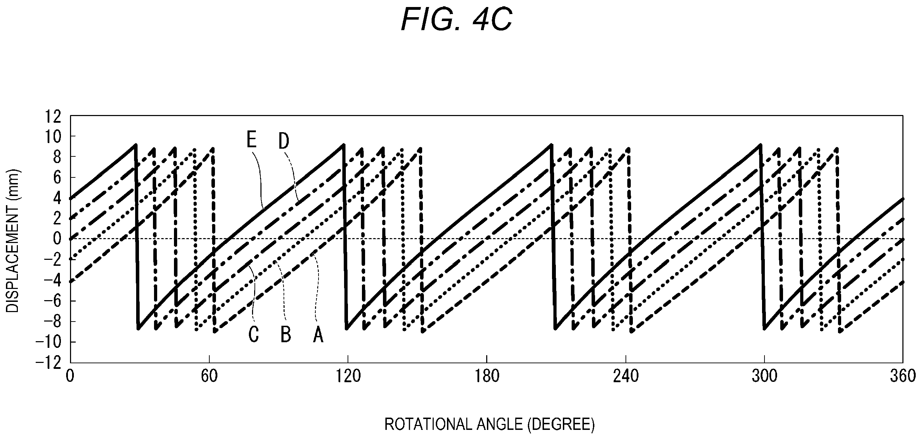

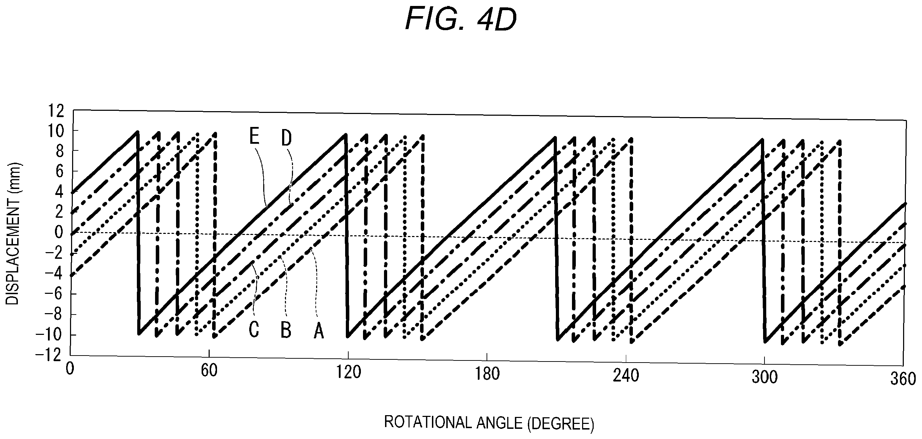

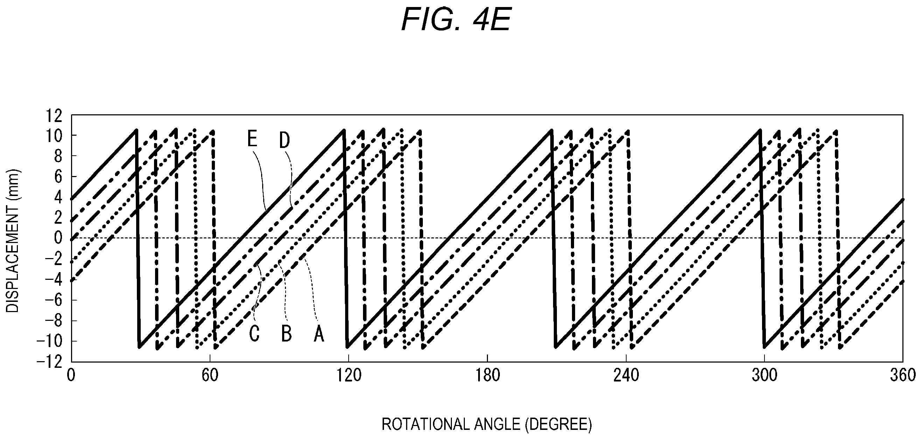

The result of the simulation is shown in FIG. 4A through FIG. 4E. FIG. 4A shows a result at the refractive index n2=1.5. FIG. 4B shows a result at the refractive index n2=1.75. FIG. 4C shows a result at the refractive index n2=2.0. FIG. 4D shows a result at the refractive index n2=2.5. FIG. 4E shows a result at the refractive index n2=3.0. In FIG. 4A through FIG. 4E, the horizontal axis represents the rotational angle (degree), and the vertical axis represents the displacement (mm). The graph denoted by the symbol A represents the light beam at the distance s=-4. The graph denoted by the symbol B represents the light beam at the distance s=-2. The graph denoted by the symbol C represents the light beam at the distance s=0 (on the optical axis). The graph denoted by the symbol D represents the light beam at the distance s=+2. The graph denoted by the symbol E represents the light beam at the distance s=+4.

When focusing attention on, for example, the graph denoted by the symbol C (the light beam on the optical axis) shown in FIG. 4A, as described using FIG. 2A through FIG. 2F, the displacement when the rotational angle is 0 degree is 0, and the displacement increases up to about +7 mm as the rotational angle increases from 0 degree to 45 degrees. When the rotational angle exceeds 45 degrees, the displacement flips in a reverse direction up to about - 7 mm, and the displacement decreases toward 0 mm as the rotational angle increases from 45 degrees up to 90 degrees. Subsequently, this cycle is repeated. Therefore, the whole shape of the graph becomes a saw blade shape. Further, the other graphs A, B, D, and E also show substantially the same tendency as that of the graph C.

When comparing FIG. 4A through FIG. 4E with each other, it has revealed that when raising the refractive index n2 of the transmissive optical part 18 from 1.5 up to 3.0, the displacement d increases from about $\pm 7$ mm up to about $\pm 11$ mm. Thus, even when the size of the transmissive optical part 18 is the same, by raising the refractive index n2 of the transmissive optical part 18 from 1.5 up to 3.0, it is possible to increase the scanning range with the light beam L1a.

Further, it has revealed that when raising the refractive index n2 of the transmissive optical part 18 from 1.5 up to 3.0, the linearity of the graph having the saw blade shape is improved. When viewing, for example, FIG. 4A, it reveals that the graphs are curved in particular in the vicinity of the rotational angle at which the plane of incidence of the transmissive optical part 18 is switched, namely in the vicinity of a sharp part in the saw blade shape. In contrast, when viewing FIG. 4E, it reveals that the graphs linearly extend even in the vicinity of the rotational angle at which the plane of incidence of the transmissive optical part 18 is switched. Although the detailed description is omitted, the inventors of the present disclosure have obtained a knowledge that the higher the linearity of the graph having the saw blade shape is, the higher the illuminance distribution of the light in the illumination target area becomes.

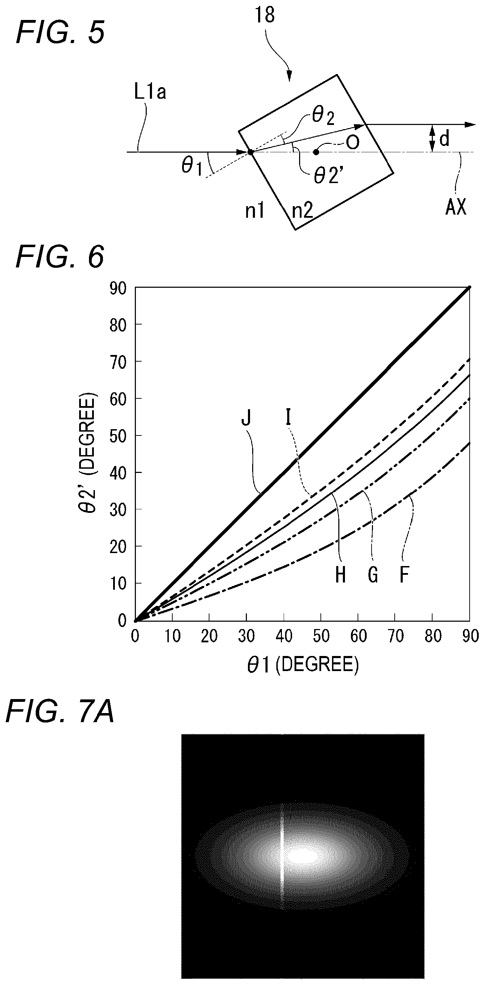

Then, as shown in FIG. 5, there is considered the relationship between the incident angle $\theta_1$ of the light beam L1a with respect to the transmissive optical part 18, and an angle $\theta_2$' between the optical axis AX and the light beam L1a which has entered the transmissive optical part 18.

The angle $\theta_2$' is expressed by the formula (1) described below. The angle $\theta_2$ is the refraction angle.

$$\theta_2' = \theta_1 - \theta_2 = \theta_1 - \sin^{-1}\left(\frac{n_1}{n_2}\sin\theta_1\right) \qquad \cdot\cdot\cdot (1)$$

From the Formula (1), it is understood that when raising the refractive index n2 of the transmissive optical part 18 toward the infinity, the angle $\theta_2'$ comes infinitely closer to the incident angle $\theta_1$.

Therefore, the following formula (2) is derived from the above formula (1).

$$\lim \theta_2' = \theta_1 \quad \cdot \cdot \cdot (2)$$

FIG. 6 is a graph showing the relationships between the incident angle $\theta_1$ and the angle $\theta_2'$ in the formula (2). In FIG. 6, the horizontal axis represents the incident angle $\theta_1$ (degree), and the vertical axis represents the angle $\theta_2'$ (degree). The graph denoted by the symbol F represents when the refractive index n2 is 1.5. The graph denoted by the symbol G represents when the refractive index n2 is 2.0. The graph denoted by the symbol H represents when the refractive index n2 is 2.5. The graph denoted by the symbol I represents when the refractive index n2 is 3.0. The graph denoted by the symbol J represents when the refractive index n2 is 1000 which is the case of supposedly taking a limit value with respect to the refractive index n2.

As shown in FIG. 6, it reveals that when raising the refractive index n2 of the transmissive optical part 18, the angle $\theta_2'$ approximates to the incident angle $\theta_1$. Therefore, by raising the refractive index n2 of the transmissive optical part 18, it is possible to increase the displacement of the light beam L1a.

Then, there is considered the illuminance distribution when illuminating the illumination target area as the two-dimensional area using two transmissive optical parts when the refractive index n2 of the transmissive optical part is sufficiently high, and the displacement has an ideal saw blade shape.

By adjusting the respective rotational frequencies of the first transmissive optical part 13 and the second transmissive optical part 14 in the embodiment described above, it becomes possible to perform the scanning with the light beam in the illumination target area as the two-dimensional area. Since the first transmissive optical part 13 and the second transmissive optical part 14 perform the scanning with the light beam in two directions perpendicular to each other, in particular when the displacement exhibits the ideal saw blade shape, the scanning with the light beam is performed so as to draw multiple linear loci obliquely extending in, for example, the illumination target area as the two-dimensional area.

Taking the time when fixing the frequency of drawing the screen into consideration, when the rotational frequencies of the respective two transmissive optical parts are relatively low, in other words, when the rotational speeds of the respective two transmissive optical parts are relatively slow, the interval between two loci adjacent to each other becomes relatively large.

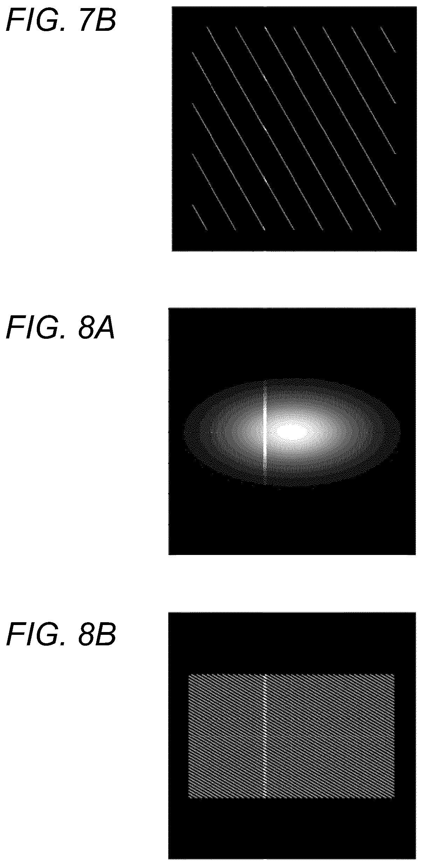

FIG. 7A is an image diagram showing an illuminance distribution of light emitted from a light emitter. FIG. 7B is an image diagram showing the loci of the light beam emitted from the second transmissive optical part.

In this case, as shown in FIG. 7B, the loci of the respective light beams obliquely extend from upper left toward lower right of the drawing, and the interval between the two loci adjacent to each other is relatively large. As shown in FIG. 7A, when the illuminance distribution of the light emitted from the light emitter exhibits a horizontally-long elliptical distribution, light and dark illuminance unevenness is generated along a direction crossing the loci in the illuminance distribution of the light on the illumination target surface.

In contrast, when the rotational frequencies of the respective two transmissive optical parts are relatively high, in other words, when the rotational speeds of the respective two transmissive optical parts are relatively fast, the interval between two loci adjacent to each other becomes relatively small.

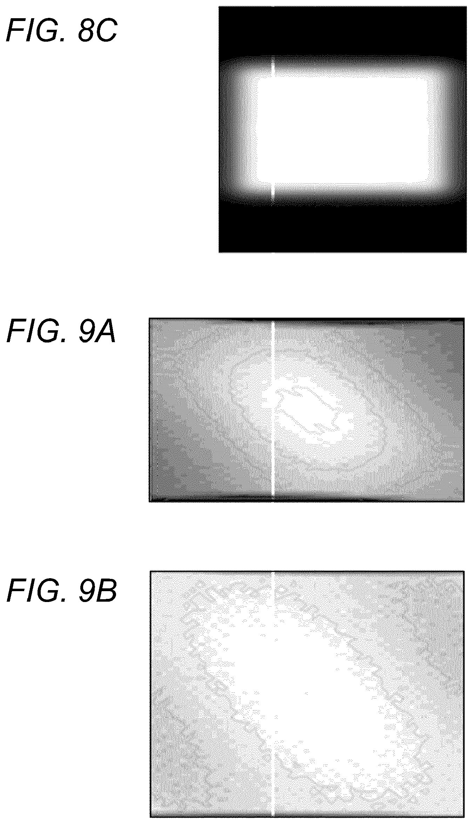

FIG. 8A is an image diagram showing an illuminance distribution of light emitted from a light emitter. FIG. 8B is an image diagram showing the loci of the light beam emitted from the second transmissive optical part. FIG. 8C is an image diagram showing an illuminance distribution of light on the illumination target surface.

In this case, as shown in FIG. 8B, the loci of the respective light beams obliquely extend from upper left toward lower right of the drawing, and the interval between the two loci adjacent to each other is sufficiently small compared to that in FIG. 7B. As shown in FIG. 8A, when the illuminance distribution of the light emitted from the light emitter exhibits an elliptical distribution, the illuminance distribution of the light on the illumination target surface exhibits a substantially homogenous illuminance distribution throughout the entire illumination target area as shown in FIG. 8C. It should be noted that a blur of the illuminance which can be observed in a circumferential edge part of the illumination target area depends on the illuminance distribution of the light emitted from the light emitter.

According to the above, when applying the light source device according to the present disclosure to a projector, by making the rotational frequencies of the two transmissive optical parts relatively high, it is possible to obtain an image low in brightness unevenness.

Then, there is considered the illuminance distribution when illuminating the illumination target area as the two-dimensional area using two transmissive optical parts when the refractive index n2 of the transmissive optical part is not so high, and the displacement does not have an ideal saw blade shape.

When the displacement does not have the ideal saw blade shape, the loci when performing scanning with the light beam in the illumination target area each have a curved shape unlike those shown in FIG. 7B or FIG. 8B. Therefore, due to a variation in density of the loci in the illumination target area, namely a remaining time density of the light beam, there occurs unevenness in luminance distribution. Therefore, as a method of improving the unevenness in illuminance distribution, there are conceivable two methods, namely a method of raising the refractive index of the transmissive optical part, and a method of changing the shape of the transmissive optical part to use a regular polygonal column having a large number of side surfaces.

First, the method of raising the refractive index of the transmissive optical part will be considered.

FIG. 9A is a diagram showing the illuminance distribution of the light when the respective refractive indexes of the two transmissive optical parts are relatively low. FIG. 9B is a diagram showing the illuminance distribution of the light when the respective refractive indexes of the two transmissive optical parts are relatively high. Specifically, in FIG. 9A, the refractive index of the first transmissive optical part is 1.5, and the refractive index of the second transmissive optical part is 1.8. In FIG. 9B, the refractive index of the first transmissive optical part is 2.5, and the refractive index of the second transmissive optical part is 2.5. In FIG. 9A and FIG. 9B, there are shown iso-illuminance curves each obtained by connecting points representing the same illuminance with a curve.

As shown in FIG. 9A and FIG. 9B, when the refractive index of each of the transmissive optical parts is relatively low, the number of the iso-illuminance curves is large, and a change in illuminance is large on the one hand, when the refractive index of each of the transmissive optical parts is relatively high, the number of the iso-illuminance curves is small, and the change in illuminance is small on the other hand. This revealed that by making the refractive indexes of the two transmissive optical parts relatively high, it is possible to make the illuminance distribution more homogenous.

Then, there will be considered the method of using the regular polygonal column having a large number of side surfaces.

As the shape of the transmissive optical part, an example of the regular quadrangular prism having the four side surfaces is cited above, and here, there is cited an example of a regular hexagonal column having six side surfaces.

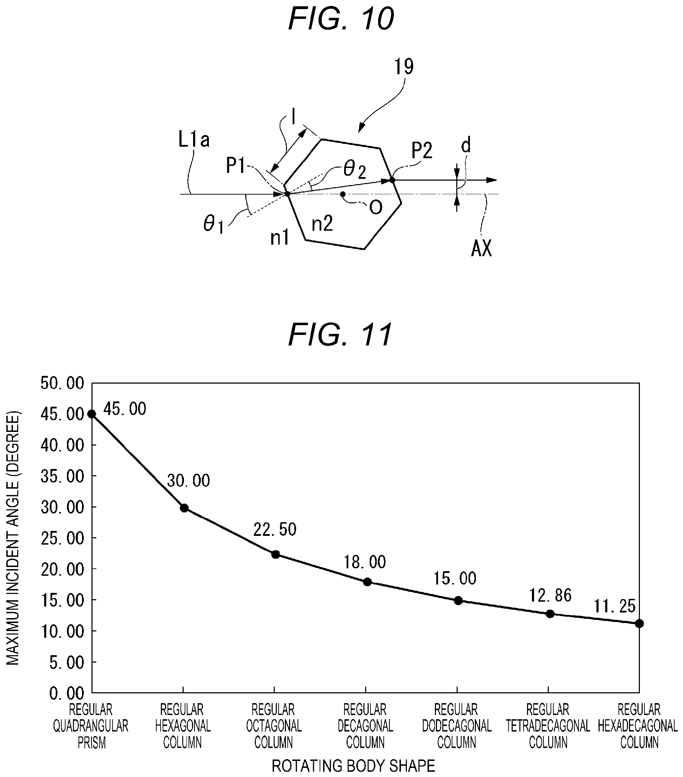

FIG. 10 is a schematic diagram showing a relationship between a transmissive optical part 19 shaped like a regular hexagonal column and a displacement of the light.

As shown in FIG. 10, in the case of the transmissive optical part 19 shaped like the regular hexagonal column, assuming that the volume of the transmissive optical part is the same, the width l of each side surface in the rotational direction becomes shorter compared to the width l of each side surface of the transmissive optical part 18 shaped like the regular quadrangular prism shown in FIG. 3. Therefore, a maximum incident angle of the light beam L1a passing on the optical axis AX in the transmissive optical part 19 shaped like the regular hexagonal column is smaller compared to a maximum incident angle of the light beam L1a passing on the optical axis AX in the transmissive optical part 18 shaped like the regular quadrangular prism.

In general, assuming that the shape of the transmissive optical part is a regular ($2 \times m$) column (m is a natural number no smaller than 2), the maximum incident angle of the light beam passing on the optical axis can be expressed as $90/m$ (degree). Specifically, the maximum incident angle in the case of the regular quadrangular prismatic shape is 45 degrees, and the maximum incident angle in the case of the regular hexagonal columnar shape is 30 degrees. In other words, the relationship between the shape of the transmissive optical part and the maximum incident angle becomes as shown in FIG. 11. In FIG. 11, the horizontal axis represents the shape of the transmissive optical part, and the vertical axis represents the maximum incident angle (degree).

As shown in FIG. 11, the larger the number of the side surfaces of the regular polygonal column constituting the transmissive optical part becomes, the smaller the maximum incident angle becomes. Therefore, the larger the number of the side surfaces of the regular polygonal column becomes, the smaller the maximum displacement of the light beam also becomes. Therefore, in order to ensure the maximum displacement of the light beam while increasing the number of the side surfaces of the regular polygonal column, it is necessary to increase the volume of the regular polygonal column to increase the width l of each side surface in the rotational direction. As a result, there is a disadvantage that the transmissive optical part grows in size. On the other hand, when increasing the number of the side surfaces of the regular polygonal column, the fact that the maximum displacement of the light beam decreases means that a curved portion in the vicinity of a peak in the graph having the saw blade shape shown in FIG. 4A through FIG. 4E decreases. Therefore, when increasing the number of side surfaces of the regular polygonal column, there is an advantage that it is possible to homogenize the illuminance distribution.

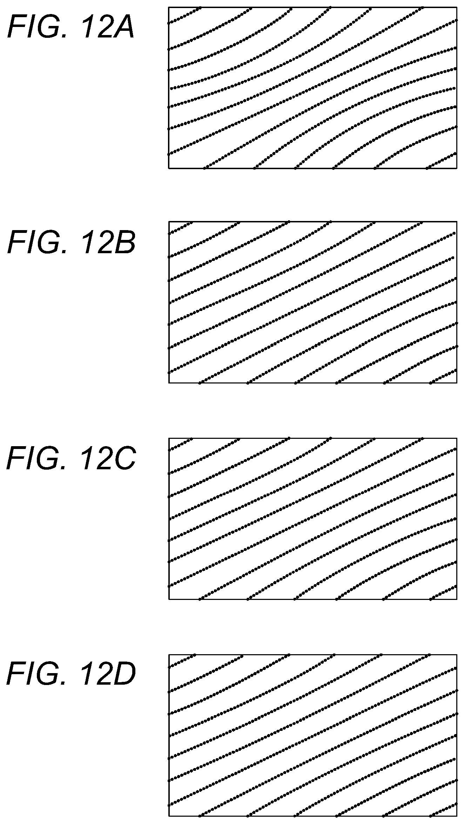

From the above consideration, when performing the simulation of the loci of the light beams in the illumination target area while changing the refractive index of the transmissive optical part and the shape of the regular polygonal column, the following result shown in FIG. 12A through FIG. 12D was obtained.

FIG. 12A shows when the refractive index of the transmissive optical part is 1.492, and the shape of the transmissive optical part is a regular quadrangular prism. FIG. 12B shows when the refractive index of the transmissive optical part is 2.5, and the shape of the transmissive optical part is the regular quadrangular prism. FIG. 12C shows when the refractive index of the transmissive optical part is 1.492, and the shape of the transmissive optical part is a regular hexagonal column. FIG. 12D shows when the refractive index of the transmissive optical part is 1.492, and the shape of the transmissive optical part is a regular octagonal column.

As shown in FIG. 12A, it reveals that the loci of the light beams are curved as a whole when the refractive index of the transmissive optical part is 1.492, and the shape of the transmissive optical part is the regular quadrangular prism. In this case, there is a possibility that there occurs the illuminance unevenness in the illumination target area. In contrast, as shown in FIG. 12B, when the refractive index of the transmissive optical part is raised up to 2.5 even when the shape of the transmissive optical part is the same, the linearity of the loci of the light beams is improved. Thus, it is possible to prevent the illuminance unevenness in the illumination target area. Alternatively, as shown in FIG. 12C, when adopting a regular hexagonal column as the shape of the transmissive optical part even when the refractive index of the transmissive optical part is the same, the linearity of the loci of the light beams is improved. Thus, it is possible to prevent the illuminance unevenness in the illumination target area. As shown in FIG. 12D, when a regular octagonal column is adopted as the shape of the transmissive optical part, the linearity of the loci of the light beams is further improved. Thus, it is possible to further prevent the illuminance unevenness in the illumination target area.

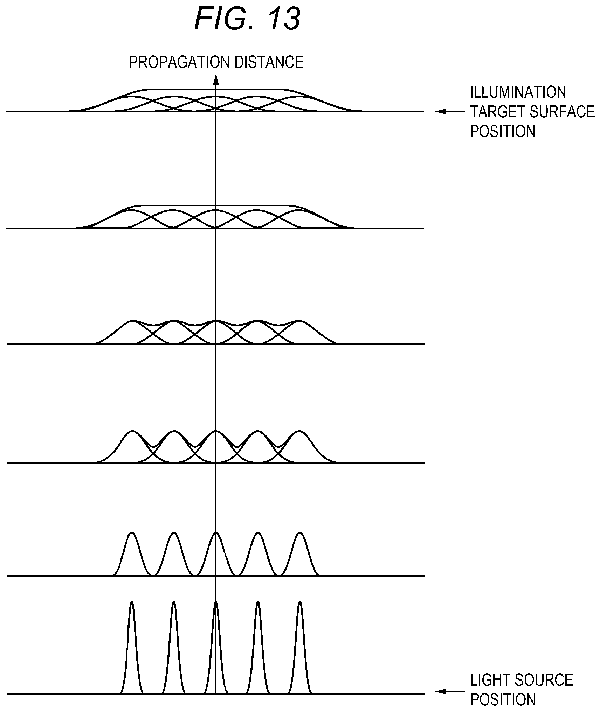

FIG. 13 is a schematic diagram showing a change in illuminance distribution when the light beams emitted from five light sources propagate as much as a predetermined distance. In FIG. 13, the horizontal axis represents the positions of the light sources in a direction perpendicular to the propagation direction of the light beams, and the vertical axis represents the propagation distance.

As shown in FIG. 13, when the light beams emitted from the light sources are each an ideal Gaussian beam, when lighting the five light sources arranged at regular intervals, the composite illuminance distribution obtained by combining all of the illuminance distributions of the five light beams is gradually averaged to become gentle as the light beams propagate. Further, at the time point when the light beams emitted from the respective light sources propagate as much as a predetermined distance, the composite illuminance distribution becomes a flat shape with vanishingly small unevenness.

The concept described above can also be applied to the light source device according to the present disclosure. Specifically, since the light source device according to the present disclosure is a scanning illumination system for performing scanning with the light beam to perform illumination, when considering the illuminance distribution on a cross-sectional surface obtained by cutting the illumination target area in a horizontal direction (the lateral direction of the drawing) in, for example, the simulation result shown in FIG. 12A through FIG. 12D, it can be assumed as the state in which the plurality of light sources having peaks of illuminance at the positions of the multiple loci is arranged side by side in the horizontal direction. Therefore, it is sufficient to set the distance from the light source to the illumination target surface, or the distance from the light source to the light modulation device in the case of the projector, so as to coincide with the distance at which the composite illuminance distribution consisting of a plurality of light beams becomes to have a flat shape with the distance between the loci adjusted. The distance between the loci can be adjusted using the rotational speed of the transmissive optical part. Thus, it is possible to obtain a homogenous illuminance distribution in the light modulation device. Attention is focused on the cross-sectional surface in, for example, a horizontal direction in the above description, but the above works out in all directions.

Second Embodiment

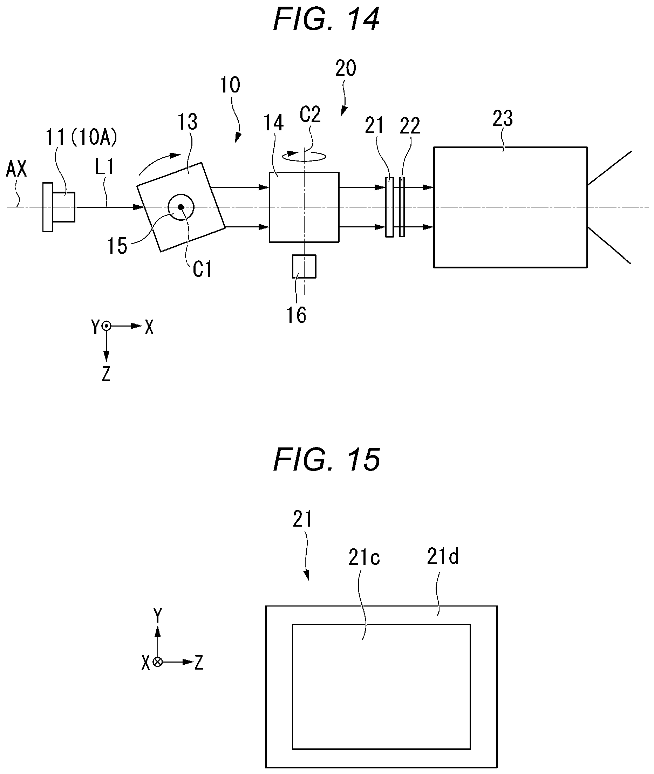

A second embodiment of the present disclosure will hereinafter be described using FIG. 14 and FIG. 15.

The projector according to the present embodiment is provided with the light source device according to the first embodiment.

FIG. 14 is a schematic configuration diagram of a projector 20 according to the present embodiment.

In FIG. 14, the elements common to FIG. 1 of the first embodiment are denoted by the same reference symbols, and the detailed description thereof will be omitted.

As shown in FIG. 14, the projector 20 is provided with the light source device 10, a light modulation device 21, an exit side polarization plate 22, and a projection optical device 23.

The light modulation device 21 is disposed at the light exit side of the light source device 10 on the optical axis AX. The light modulation device 21 modulates the first light beam L1 emitted from the light source device 10 in accordance with image information to form an image light beam. In the light modulation device 21, there is used a transmissive liquid crystal panel. The liquid crystal panel can be provided with a color filter, and is not required to be provided with the color filter. When the liquid crystal panel is provided with the color filter, it is possible to realize the projector 20 capable of performing color display. When the liquid crystal panel is not provided with the color filter, it is possible to realize the projector 20 capable of performing monochromatic display. As a drive system for the liquid crystal panel, there is used a twisted nematic (TN) system, a vertical alignment (VA) system, an in-plane switching (IPS) system, or the like, but the drive system is not particularly limited.

FIG. 15 is a front view of the light modulation device 21 viewed from the direction of the optical axis AX.

As shown in FIG. 15, the light modulation device 21 has a light modulation area 21c and a light blocking area 21d. The light modulation area 21c is an area where a plurality of pixels is arranged in a matrix, and modulates the first light beam L1 which enters the light modulation device 21, and then emits the first light beam L1 thus modulated. The light blocking area 21d is located on the periphery of the light modulation area 21c, and blocks the light which does not contribute on the modulation out of the first light beam L1 entering the light modulation device 21. An area which is two-dimensionally scanned with the first light beam L1 emitted from the second transmissive optical part 14 corresponds to the light modulation area 21c. Parameters such as the sizes and refractive indexes of the first transmissive optical parts 13, 14 of the light source device 10 are designed in accordance with the size and the aspect ratio of the light modulation area 21c.

The exit side polarization plate 22 is disposed between the light modulation device 21 and the projection optical device 23 on the optical axis AX. The exit side polarization plate 22 transmits the linearly-polarized light beam in a specific direction, which is emitted from the light modulation device 21, toward the projection optical device 23. In the case of the present embodiment, since the laser diode is used in the first light emitter 11, a linearly-polarized light beam is emitted from the light source device 10. Therefore, the incidence side polarization plate disposed at the light incidence side of the light modulation device 21 is unnecessary.

The projection optical device 23 is constituted by a plurality of projection lenses. The projection optical device 23 projects the image light beam having been modulated by the light modulation device 21 toward the projection target surface such as a screen in an enlarged manner. Thus, the image is displayed on the projection target surface.

Advantages of Second Embodiment

Since the projector 20 according to the present embodiment is provided with the light source device 10 according to the first embodiment, it is possible to make the first light beam L1 emitted from the light source device 10 always perpendicularly enter the light modulation device 21 as described in the first embodiment. As a result, the degradation of the brightness and the contrast, and the occurrence of the color unevenness in the light modulation device 21, the loss of light in the projection optical device 23, and so on are suppressed, and it is possible to realize the projector 20 excellent in display quality.

Even when the first light beam L1 emitted from the first light emitter 11 is the laser beam having coherence, the scanning with the first light beam L1 is two-dimensionally performed at high speed on the light modulation device 21, and thus, the first light beam L1 is temporally overlapped. Thus, it is possible to prevent the illuminance unevenness caused by using the light source having the coherence. Further, by making the loci of the first light beam L1 high in density, it is possible to create the state in which the plurality of first light beams L1 overlap each other in a pseudo manner. Due to this action, it is also possible to prevent the illuminance unevenness caused by using the light source having the coherence.

According to the light source device 10 related to the present embodiment, it is possible to illuminate a substantially rectangular shape without using an optical system for forming light to have a rectangular shape such as a multi-lens. Therefore, since it is possible to make the whole light path length relatively short, and at the same time, it is possible to reduce the optical components to thereby decrease the number of interfaces between the optical system and the air, and therefore, it is possible to reduce the loss of light caused by the interfacial reflection to increase the light use efficiency.

Since the light source device 10 according to the present embodiment is a scanning type illumination device, it is possible to put the first light emitter 11 off when the first light beam L1 reaches the area where black is intended to be displayed in the light modulation area 21c. Thus, the method of illuminating only the area other than the black display, a so-called area illumination, becomes possible, and it is possible to sufficiently increase the efficiency of the exit light intensity to the input power compared to a conventional non-scanning type illumination method. In association with the above, since the light absorbed by the exit side polarization plate 22 when performing the black display decreases, it is possible to reduce the burden on the exit side polarization plate 22. Thus, it is possible to expect an advantage such as an increase in reliability of the exit side polarization plate 22, or an increase in contrast due to adoption of a polarization plate made of an organic material.

Third Embodiment

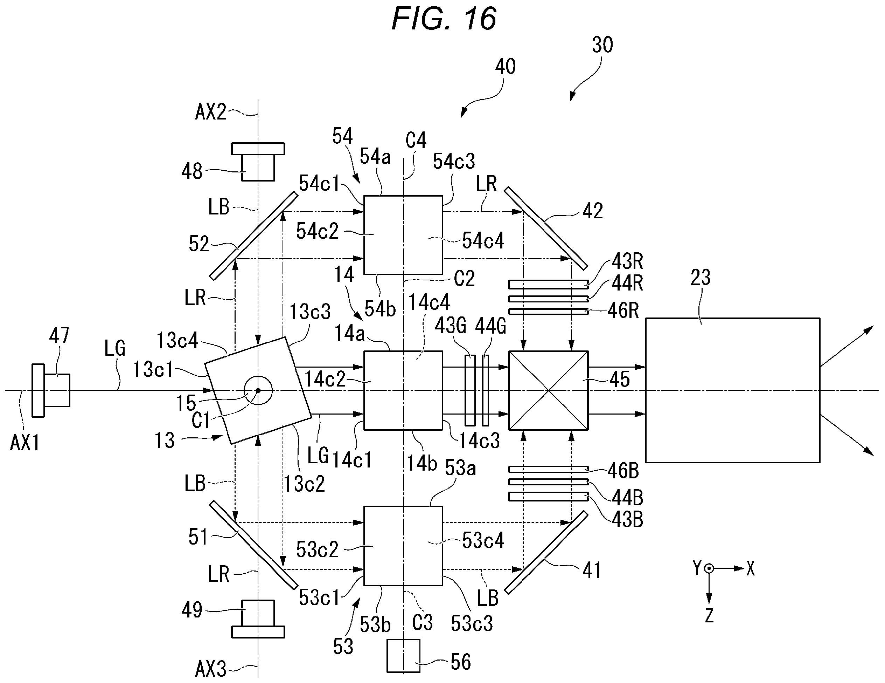

A third embodiment of the present disclosure will hereinafter be described using FIG. 16.
FIG. 16 is a schematic configuration diagram of a projector 30 according to the third embodiment.
In FIG. 16, the constituents common to FIG. 1 of the first embodiment are denoted by the same reference symbols, and the detailed description thereof will be omitted.
As shown in FIG. 16, the projector 30 is provided with a light source device 40, a first reflecting mirror 41, a second reflecting mirror 42, a green-light light modulation device 43G, an exit side polarization plate 44G, a blue-light light modulation device 43B, an exit side polarization plate 44B, a 1/2 wave plate 46B, a red-light light modulation device 43R, an exit side polarization plate 44R, a 1/2 wave plate 46R, an image light combining element 45, and the projection optical device 23.
The light source device according to the present embodiment is provided with a first light emitter 47, a second light emitter 48, a third light emitter 49, a first wavelength-selective reflecting element 51, a second wavelength-selective reflecting element 52, the first transmissive optical part 13, the second transmissive optical part 14, a third transmissive optical part 53, and a fourth transmissive optical part 54.

The first light emitter 47 emits the first light beam LG in a first wavelength band toward the first transmissive optical part 13. The first light emitter 47 is formed of a laser diode. Therefore, the first light beam LG to be emitted from the first light emitter 47 is linearly-polarized light having coherence, and is a light beam narrow in flux width, and high in parallelism. The first wavelength band is a green wavelength band of, for example, 530 nm ±5 nm. In other words, the first light beam LG is a green light beam. The first light beam LG is hereinafter referred to as the green light beam LG. The first light emitter 47 emits the green light beam LG toward the +X side.

The second light emitter 48 emits a second light beam LB in a second wavelength band toward the first transmissive optical part 13. The second light emitter 48 is formed of a laser diode. Therefore, the second light beam LB to be emitted from the second light emitter 48 is linearly-polarized light having coherence, and is a light beam narrow in flux width, and high in parallelism. The second wavelength band is a blue wavelength band of, for example, 450 nm ±5 nm. In other words, the second light beam LB is a blue light beam. The second light beam LB is hereinafter referred to as the blue light beam LB.

The third light emitter 49 emits the third light beam LR in a third wavelength band toward the first transmissive optical part 13. The third light emitter 49 is formed of a laser diode. Therefore, the third light beam LR to be emitted from the third light emitter 49 is linearly-polarized light having coherence, and is a light beam narrow in flux width, and high in parallelism. The third wavelength band is a red wavelength band of, for example, 650 nm ±5 nm. In other words, the third light beam LR is a red light beam. The third light beam LR is hereinafter referred to as the red light beam LR.

An optical axis AX1 of the first light emitter 47 is defined as an axis extending along a principal ray of the green light beam LG emitted from the first light emitter 47. An optical axis AX2 of the second light emitter 48 is defined as an axis extending along a principal ray of the blue light beam LB emitted from the second light emitter 48. An optical axis AX3 of the third light emitter 49 is defined as an axis extending along a principal ray of the red light beam LR emitted from the third light emitter 49. The optical axis AX2 and the optical axis AX3 are located on the same axis, and are perpendicular to the optical axis AX1. The first light emitter 47 emits the green light beam LG toward the +X side. The second light emitter 48 and the third light emitter 49 emit the light beams toward respective directions opposite to each other. In other words, the second light emitter 48 emits the blue light beam LB toward the -Z side. The third light emitter 49 emits the red light beam LR toward the +Z side.

The first wavelength-selective reflecting element 51 is disposed on a light path of the red light beam LR emitted from the third light emitter 49, between the third light emitter 49 and the first transmissive optical part 13. The first wavelength-selective reflecting element 51 is formed of a dichroic mirror which reflects blue light while transmitting red light.

The second wavelength-selective reflecting element 52 is disposed on a light path of the blue light beam LB emitted from the second light emitter 48, between the second light emitter 48 and the first transmissive optical part 13. The second wavelength-selective reflecting element 52 is formed of a dichroic mirror which transmits blue light while reflecting red light.

The configuration of the first transmissive optical part 13 is substantially the same as that of the first transmissive optical part 13 in the first embodiment. In the case of the present embodiment, a plurality of colored light beams having respective wavelength bands different from each other enters the first transmissive optical part 13. In this case, it is desirable to use a glass material small in wavelength dispersion, namely a glass material high in Abbe number, as a glass material of the light transmissive member. The green light beam LG, the blue light beam LB, and the red light beam LR are emitted from the first transmissive optical part 13.

The configuration of the second transmissive optical part 14 is substantially the same as that of the second transmissive optical part 14 in the first embodiment. The green light beam LG to be emitted from the first transmissive optical part 13 enters the second transmissive optical part 14. The blue light beam LB which is emitted from the first transmissive optical part 13, and is reflected by the first wavelength-selective reflecting element 51 enters the third transmissive optical part 53. The red light beam LR which is emitted from the first transmissive optical part 13, and is reflected by the second wavelength-selective reflecting element 52 enters the fourth transmissive optical part 54.

The third transmissive optical part 53 is disposed on the light path of the blue light beam LB reflected by the first wavelength-selective reflecting element 51. The third transmissive optical part 53 is formed of a light transmissive member rotatably supported. The third transmissive optical part 53 is made rotatable centering on a third rotational axis C3 extending along the Z-axis direction. The shape and the size of the third transmissive optical part 53 are the same as the shape and the size of the second transmissive optical part 14, respectively.

The third transmissive optical part 53 has a fifth surface 53a and a sixth surface 53b crossing the third rotational axis C3, and four third side surfaces 53c1, 53c2, 53c3, and 53c4 having perpendicular contact with the fifth surface 53a and the sixth surface 53b. In other words, the shape of the third transmissive optical part 53 is a regular quadrangular prism having six planes including the fifth surface 53a, the sixth surface 53b, and the four third side surfaces 53c1, 53c2, 53c3, and 53c4.

The third transmissive optical part 53 transmits the blue light beam LB which is emitted from the first transmissive optical part 13 and is reflected by the first wavelength-selective reflecting element 51 while rotating centering on the third rotational axis C3. In the third transmissive optical part 53, the third side surface through which the blue light beam LB emitted from the first transmissive optical part 13 enters the third transmissive optical part 53 is referred to as a third plane of incidence. The third side surface from which the blue light beam LB having entered the third transmissive optical part 53 through the third plane of incidence is emitted is referred to as a third exit surface. The third plane of incidence and the third exit surface change according to time, and are any of pairs of third side surfaces parallel to each other out of the four third side surfaces 53c1, 53c2, 53c3, and 53c4. In other words, the third plane of incidence and the third exit surface are parallel to each other.

The fourth transmissive optical part 54 is disposed on the light path of the red light beam LR reflected by the second wavelength-selective reflecting element 52. The fourth transmissive optical part 54 is formed of a light transmissive member rotatably supported. The fourth transmissive optical part 54 is made rotatable centering on a fourth rotational axis C4 extending along the Z-axis direction. The shape and the size of the fourth transmissive optical part 54 are the same as the shape and the size of the second transmissive optical part 14, respectively.

The fourth transmissive optical part 54 has a seventh surface 54a and an eighth surface 54b crossing the fourth rotational axis C4, and four fourth side surfaces 54c1, 54c2, 54c3, and 54c4 having perpendicular contact with the seventh surface 54a and the eighth surface 54b. In other words, the shape of the fourth transmissive optical part 54 is a regular quadrangular prism having six planes including the seventh surface 54a, the eighth surface 54b, and the four fourth side surfaces 54c1, 54c2, 54c3, and 54c4.

The fourth transmissive optical part 54 transmits the red light beam LR which is emitted from the first transmissive optical part 13 and is reflected by the second wavelength-selective reflecting element 52 while rotating centering on the fourth rotational axis C4. In the fourth transmissive optical part 54, the fourth side surface through which the red light beam LR emitted from the first transmissive optical part 13 enters the fourth transmissive optical part 54 is referred to as a fourth plane of incidence. The fourth side surface from which the red light beam LR having entered the fourth transmissive optical part 54 through the fourth plane of incidence is emitted is referred to as a fourth exit surface. The fourth plane of incidence and the fourth exit surface change according to time, and are any of pairs of fourth side surfaces parallel to each other out of the four fourth side surfaces 54c1, 54c2, 54c3, and 54c4. In other words, the fourth plane of incidence and the fourth exit surface are parallel to each other.

The second rotational axis C2 of the second transmissive optical part 14, the third rotational axis C3 of the third transmissive optical part 53, and the fourth rotational axis C4 of the fourth transmissive optical part 54 are located on the same axis. In the case of the present embodiment, the second transmissive optical part 14, the third transmissive optical part 53, and the fourth transmissive optical part 54 are coupled to the second rotary drive device 56 via a common shaft body. According to this configuration, compared to when disposing the rotary drive device for each of the transmissive optical parts, it is possible to reduce the number of the rotary drive devices, and thus, it is possible to simplify the device configuration. Further, there is no need to synchronize conditions such as rotational speed and phase in the three transmissive optical parts 14, 53, and 54, and thus, it becomes easy to control the rotation. Further, it is possible to reduce a scroll noise generated due to a synchronization error of the rotation.

Although the transmissive optical parts 14, 53, and 54 are formed of the individual light transmissive members in the example shown in FIG. 16, instead of this configuration, it is possible for the second transmissive optical part 14, the third transmissive optical part 53, and the fourth transmissive optical part 54 to be formed of an integrated light transmissive member. According to this configuration, since it is possible to eliminate the gap between the transmissive optical parts adjacent to each other, it is possible to achieve a reduction in size of the transmissive optical parts. Further, it is possible to obtain the advantages described above such as the advantage that it becomes easy to control the rotation, and the advantage that it is possible to reduce the scroll noise.

The first reflecting mirror 41 reflects the blue light beam LB which is emitted from the third transmissive optical part 53, toward the blue-light light modulation device 43B. As described above, the first reflecting mirror 41 bends the light path of the blue light beam LB emitted from the third transmissive optical part 53 from the +X direction to the -Z direction.

The second reflecting mirror 42 reflects the red light beam LR which is emitted from the fourth transmissive optical part 54, toward the red-light light modulation device 43R. As described above, the second reflecting mirror 42 bends the light path of the red light beam LR emitted from the fourth transmissive optical part 54 from the +X direction to the +Z direction.

The green-light light modulation device 43G modulates the green light beam LG which is emitted from the second transmissive optical part 14 of the light source device 40, in accordance with the image information to form a green image light beam. The blue-light light modulation device 43B modulates the blue light beam LB which is emitted from the third transmissive optical part 53 of the light source device 40, in accordance with the image information to form a blue image light beam. The red-light light modulation device 43R modulates the red light beam LR which is emitted from the fourth transmissive optical part 54 of the light source device 40, in accordance with the image information to form a red image light beam. As the light modulation devices 43B, 43G, and 43R, there are used transmissive liquid crystal panels.

At the light exit side of the light modulation devices 43G, 43B, and 43R, there are disposed the exit side polarization plates 44G, 44B, and 44R, respectively. The exit side polarization plates 44G, 44B, and 44R each transmit the linearly-polarized light in a specific direction.

The image light combining element 45 combines the image light beams corresponding respectively to the red light beam LR, the green light beam LG, and the blue light LB with each other in response to incidence of the image light beams of the respective colors emitted from the green-light light modulation device 43G, the blue-light light modulation device 43B, and the red-light light modulation device 43R, and then emits the image light beam thus combined toward the projection optical device 23. As the image light combining element 45, there is used, for example, a cross dichroic prism.

The 1/2 wave plates 46B, 46R are disposed respectively between the blue-light light modulation device 43B and the image light combining element 45, and between the red-light light modulation device 43R and the image light combining element 45. The 1/2 wave plates 46B, 46R each provide the incident colored light beam with a phase difference of 1/2 wavelength to rotate the polarization direction of the linearly-polarized light by 90 degrees. Thus, it is possible to make the polarization direction of the green light beam LG which enters the image light combining element 45 and the polarization directions of the blue light beam LB and the red light beam LR which enter the image light combining element 45 different from each other. According to this configuration, it is possible to increase the efficiency of the image light combining element 45.

The projection optical device 23 is constituted by a plurality of projection lenses. The projection optical device 23 projects the image light beam emitted from the image light combining element 45, toward the projection target surface such as a screen in an enlarged manner. Thus, the image is displayed on the projection target surface.

Advantages of Third Embodiment

Also in the present embodiment, it is possible to obtain substantially the same advantages as those of the second embodiment such as the advantage that it is possible to improve the problem such as the degradation of the brightness and the contrast and the occurrence of the color unevenness in the light modulation devices 43G, 43B, and 43R, the loss of light in the projection optical device 23, and the illuminance unevenness caused by using the light source having coherence, and the advantage that it is possible to reduce the optical components to decrease the number of the interfaces between the optical system and the air, and therefore, it is possible to reduce the loss of light due to the interfacial reflection, and thus, it is possible to realize the projector 30 capable of displaying a color image.

Fourth Embodiment

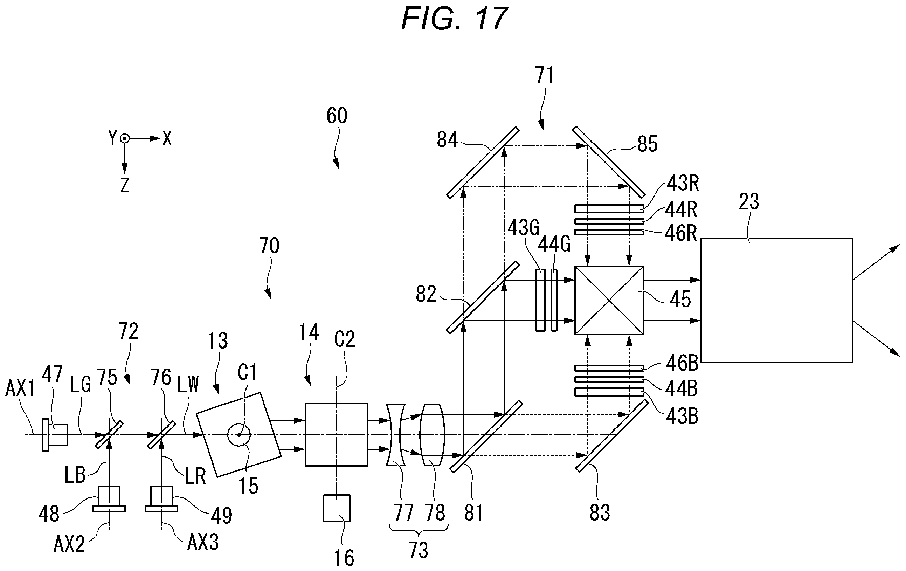

A fourth embodiment of the present disclosure will hereinafter be described using FIG. 17.

FIG. 17 is a schematic configuration diagram of a projector 60 according to the fourth embodiment.

In FIG. 17, the constituents common to the drawings used in the previous embodiments are denoted by the same reference symbols, and the description thereof will be omitted.

As shown in FIG. 17, the projector 60 is provided with a light source device 70, a color separation optical system 71, the green-light light modulation device 43G, the exit side polarization plate 44G, the blue-light light modulation device 43B, the exit side polarization plate 44B, the 1/2 wave plate 46B, the red-light light modulation device 43R, the exit side polarization plate 44R, the 1/2 wave plate 46R, the image light combining element 45, and the projection optical device 23.

The light source device 70 according to the present embodiment is provided with the first light emitter 47, the second light emitter 48, the third light emitter 49, a light combining optical system 72, the first transmissive optical part 13, the second transmissive optical part 14, and a flux width adjustment optical system 73.

The second light emitter 48 is arranged in a posture in which the optical axis AX2 of the second light emitter 48 is perpendicular to the optical axis AX1 of the first light emitter 47. The third light emitter 49 is arranged in a posture in which the optical axis AX3 of the third light emitter 49 is perpendicular to the optical axis AX1 of the first light emitter 47.

The light combining optical system 72 is provided with a first light combining element 75 and a second light combining element 76. The first light combining element 75 is disposed at a position where the optical axis AX1 and the optical axis AX2 cross each other. The first light combining element 75 is formed of a dichroic mirror which transmits green light, and reflects blue light. The second light combining element 76 is disposed at a position where the optical axis AX1 and the optical axis AX3 cross each other. The second light combining element 76 is formed of a dichroic mirror which transmits green light and blue light, and reflects red light. The light combining optical system 72 combines the green light beam LG emitted from the first light emitter 47, the blue light beam LB emitted from the second light emitter 48, and the red light beam LR emitted from the third light emitter 49 with each other to generate a composite light beam LW having a white color. The composite light beam LW enters the first transmissive optical part 13.

The flux width adjustment optical system 73 is disposed between the second transmissive optical part 14 and the color separation optical system 71. The flux width adjustment optical system 73 is constituted by a single concave lens 77 and a single convex lens 78, but the types and the number of the lenses are not particularly limited. The flux width adjustment optical system 73 adjusts the flux width of the composite light beam LW emitted from the second transmissive optical part 14. The flux width adjustment optical system 73 in the present embodiment is an optical system which adjusts the flux width of a parallel light beam having entered the flux width adjustment optical system 73, and then emits the result as a parallel light beam with the adjusted flux width, namely a so-called afocal optical system.

The color separation optical system 71 is provided with a first dichroic mirror 81, a second dichroic mirror 82, a first reflecting mirror 83, a second reflecting mirror 84, and a third reflecting mirror 85. The color separation optical system 71 separates the composite light beam LW emitted from the flux width adjustment optical system 73 into the red light beam LR, the green light beam LG, and the blue light beam LB, and then guides the red light beam LR to the red-light light modulation device 43R, guides the green light beam LG to the green-light light modulation device 43G, and guides the blue light beam LB to the blue-light light modulation device 43B.

The first dichroic mirror 81 transmits the blue light beam LB, and reflects the green light beam LG and the red light beam LR. The second dichroic mirror 82 reflects the green light beam LG, and transmits the red light beam LR. The first reflecting mirror 83 reflects the blue light beam LB. The second reflecting mirror 84 and the third reflecting mirror 85 each reflect the red light beam LR.

The blue light beam LB transmitted through the first dichroic mirror 81 is reflected by the first reflecting mirror 83, and then enters a light modulation area of the blue-light light modulation device 43B. The green light beam LG reflected by the first dichroic mirror 81 is further reflected by the second dichroic mirror 82, and then enters a light modulation area of the green-light light modulation device 43G. The red light beam LR reflected by the first dichroic mirror 81 and then transmitted through the second dichroic mirror 82 is reflected by each of the second reflecting mirror 84 and the third reflecting mirror 85, and then enters a light modulation area of the red-light light modulation device 43R.

The rest of the configuration of the projector 60 is substantially the same as that of the projector 30 according to the third embodiment.

Advantages of Fourth Embodiment

Also in the present embodiment, it is possible to obtain substantially the same advantages as those of the second embodiment such as the advantage that it is possible to improve the problem such as the degradation of the brightness and the contrast and the occurrence of the color unevenness in the light modulation devices 43G, 43B, and 43R, the loss of light in the projection optical device 23, and the illuminance unevenness caused by using the light source having coherence, and the advantage that it is possible to reduce the optical components to decrease the number of the interfaces between the optical system and the air, and therefore, it is possible to reduce the loss of light due to the interfacial reflection, and thus, it is possible to realize the projector 60 capable of displaying a color image.

In particular, in the case of the present embodiment, only by adjusting the sizes of the first transmissive optical parts 13, 14 of the light source device 70 or the magnifying power of the flux width adjustment optical system 73, it is possible to match the illumination target area of the composite light beam LW to the light modulation areas of the light modulation devices 43G, 43B, and 43R. Further, since the composite light beam LW as white light having a rectangular cross-sectional shape is emitted in parallel from the light source device 70, it is possible to use an existing optical system of the projector as an optical system in a posterior stage of the light source device 70, and there is no need to design an additional optical system.

Fifth Embodiment

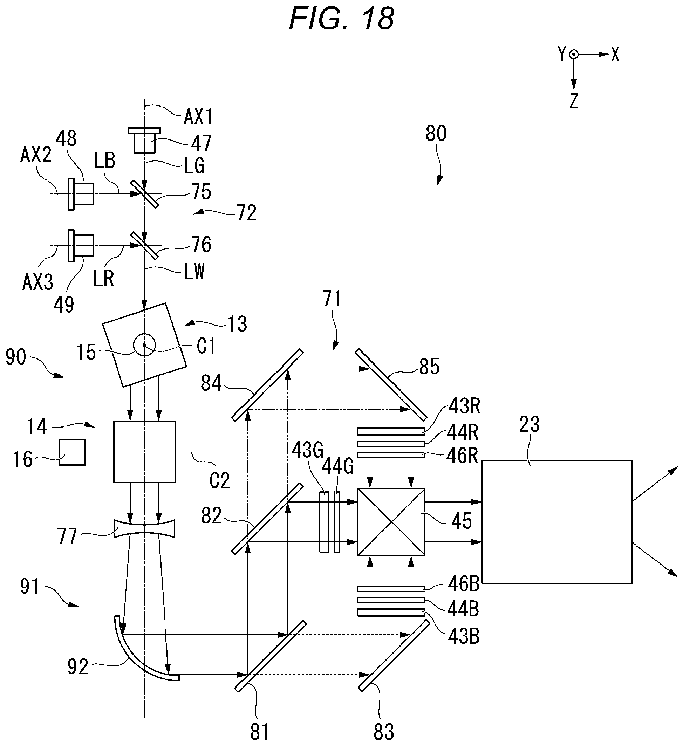

A fifth embodiment of the present disclosure will hereinafter be described using FIG. 18.

FIG. 18 is a schematic configuration diagram of a projector 80 according to the fifth embodiment.

In FIG. 18, the constituents common to the drawings used in the previous embodiments are denoted by the same reference symbols, and the description thereof will be omitted.

As shown in FIG. 18, the projector 80 is provided with a light source device 90, the color separation optical system 71, the green-light light modulation device 43G, the exit side polarization plate 44G, the blue-light light modulation device 43B, the exit side polarization plate 44B, the 1/2 wave plate 46B, the red-light light modulation device 43R, the exit side polarization plate 44R, the 1/2 wave plate 46R, the image light combining element 45, and the projection optical device 23.

The light source device 90 according to the present embodiment is provided with the first light emitter 47, the second light emitter 48, the third light emitter 49, the light combining optical system 72, the first transmissive optical part 13, the second transmissive optical part 14, and a flux width adjustment optical system 91.

The projector 80 and the light source device 90 according to the present embodiment are substantially the same in basic configuration as the projector 60 and the light source device 70 according to the fourth embodiment. In the fourth embodiment, the flux width adjustment optical system 73 is provided with the single concave lens 77 and the single convex lens 78. In contrast, in the present embodiment, the flux width adjustment optical system 91 is provided with the single concave lens 77 and a single light path bending element 92. In other words, the light source device 90 according to the present embodiment is different from the light source device 70 according to the fourth embodiment in the point that the flux width adjustment optical system 91 is provided with the light path bending element 92.

The light path bending element 92 is formed of a concave mirror, reflects the composite light beam LW emitted from the second transmissive optical part 14, and bends the light path of the composite light beam LW by 90 degrees from the +Z side to the +X side. The concave mirror has positive power equivalent to that of the convex lens 78 in the fourth embodiment, collimates the diverging light emitted from the concave lens 77, and then emits the result toward the color separation optical system 71.

Advantages of Fifth Embodiment

Also in the present embodiment, it is possible to obtain substantially the same advantages as those of the second embodiment such as the advantage that it is possible to improve the problem such as the degradation of the brightness and the contrast and the occurrence of the color unevenness in the light modulation devices 43G, 43B, and 43R, the loss of light in the projection optical device 23, and the illuminance unevenness caused by using the light source having coherence, and the advantage that it is possible to reduce the optical components to decrease the number of the interfaces between the optical system and the air, and therefore, it is possible to reduce the loss of light due to the interfacial reflection, and thus, it is possible to realize the projector 80 capable of displaying a color image. Further, it is possible to obtain substantially the same advantage as in the fourth embodiment such as the advantage that it is possible to use the existing optical system as the optical system in the posterior stage of the light source device 90.

Further, according to the light source device 90 related to the present embodiment, since it is possible to emit the composite light beam LW toward a direction perpendicular to the optical axis AX1 of the first light emitter 47, it is possible to efficiently arrange the optical components of the projector 80, and thus, it is possible to achieve a reduction in size of the projector 80.

It should be noted that the scope of the present disclosure is not limited to the embodiments described above, and a variety of modifications can be provided thereto within the scope or the spirit of the present disclosure. Further, one aspect of the present disclosure can be provided with a configuration obtained by arbitrarily combining characterizing portions of the respective embodiments described above with each other.

In the light source device according to the embodiments described above, there is cited the example of the polygonal column having an even number of side surfaces as the shape of each of the transmissive optical parts. From the viewpoint that the stray light rarely occurs, and the light use efficiency is high, the polygonal column having an even number of side surfaces is desirable. It should be noted that as long as a set of a plane of incidence and an exit surface parallel to each other are provided, it is possible to adopt a shape other than the polygonal column having an even number of side surfaces. Further, the "rotation" in the embodiments of the present application can include performing similar scanning by oscillating the transmissive optical part.

Besides the above, the specific descriptions of the shape, the number, the arrangement, the material, and so on of the constituents of the light source device and the projector are not limited to those in the embodiments described above, and can arbitrarily be modified. Further, although in the embodiments described above, there is described the example of installing the light source device according to the present disclosure in the projector using the liquid crystal panel, the example is not a limitation. The light source device according to the present disclosure can also be applied to a projector using a digital micromirror device as the light modulation device.

Although in the embodiment described above, there is described the example of applying the light source device according to the present disclosure to the projector, the example is not a limitation. The light source device according to the present disclosure can also be applied to lighting equipment, a headlight of a vehicle, and so on.

**Claims**

1.  A light source device (10) comprising:

    a first light emitter (11) configured to emit a first light beam (L1) in a first wavelength band;
    a first optical part (13) which is rotatably supported, and which has a first plane of incidence (13c1) which the first light beam emitted from the first light emitter enters, and a first exit surface (13c3) from which the first light beam entering the first optical part through the first plane of incidence is emitted; and
    a second optical part (14) which is rotatably supported, and which has a second plane of incidence (14c1) which the first light beam emitted from the first optical part enters, and a second exit surface (14c3) from which the first light beam entering the second optical part through the second plane of incidence is emitted, wherein
    the first light passes through the first optical part and the second optical part,
    the first optical part is configured to rotate centering on a first rotational axis (C1) extending along a second direction crossing a first direction as an incident direction of the first light beam with respect to the first optical part,

the second optical part is configured to rotate centering on a second rotational axis (C2) extending along a third direction crossing the first direction and the second direction,

the first plane of incidence and the first exit surface are parallel to each other, and

the second plane of incidence and the second exit surface are parallel to each other,

the light source device further comprising:

a second light emitter (48) configured to emit a second light beam (LB) in a second wavelength band different from the first wavelength band; and

a third light emitter (49) configured to emit a third light beam (LR) in a third wavelength band different from the first wavelength band and the second wavelength band, wherein

the first light beam emitted from the first light emitter (11), the second light beam emitted from the second light emitter, and the third light beam emitted from the third light emitter enter the first optical part (13),

**characterized by** the light source device further comprising:

a first wavelength-selective reflecting element (52) configured to reflect the second light beam (LB) and transmit the third light beam (LR);

a second wavelength-selective reflecting element (51) configured to transmit the second light beam and reflect the third light beam;

a third optical part (53) which is rotatably supported, and which has a third plane of incidence (53c1) which the second light beam enters, and a third exit surface (53c3) from which the second light beam entering the third optical part through the third plane of incidence is emitted; and

a fourth optical part (54) which is rotatably supported, and which has a fourth plane of incidence (54c1) which the third light beam enters, and a fourth exit surface (54c3) from which the third light beam entering the fourth optical part through the fourth plane of incidence is emitted, wherein

the first wavelength-selective reflecting element is disposed on a light path of the third light beam emitted from the third light emitter (49) between the third light emitter and the first optical part (13),

the second wavelength-selective reflecting element is disposed on a light path of the second light beam emitted from the second light emitter (48) between the second light emitter and the first optical part,

the third optical part is configured to rotate centering on a third rotational axis (C3) extending along the third direction,

the fourth optical part (54) is configured to rotate centering on a fourth rotational axis (C4) extending along the third direction,

the third plane of incidence (53c1) and the third exit surface (53c3) are parallel to each other,

the fourth plane of incidence (54c1) and the fourth exit surface (54c3) are parallel to each other,

the second light beam which is emitted from the first optical part, and is reflected by the first wavelength-selective reflecting element (52) enters the third optical part, and

the third light beam which is emitted from the first optical part, and is reflected by the second wavelength-selective reflecting element enters the fourth optical part.

2. The light source device (10) according to Claim 1, wherein

the first optical part (13) is configured to rotate centering on the first rotational axis (C1) to thereby perform scanning with the first light beam emitted from the first light emitter (11) in a first scanning direction,

the second optical part (14) is configured to rotate centering on the second rotational axis (C2) to thereby perform scanning with the first light beam emitted from the first optical part in a second scanning direction crossing the first scanning direction, and

two-dimensional scanning with the first light beam is achieved by the first optical part and the second optical part.

3. The light source device (10) according to Claims 1 or 2, wherein

the first optical part (13) has a first surface (13a) and a second surface (13b) crossing the first rotational axis (C1), and $2 \times m$ (m is a natural number no smaller than 2) first side surfaces (13c1, 13c2, 13c3, 13c4) having contact with the first surface and the second surface,

the first plane of incidence (13c1) and the first exit surface (13c3) are two of the $2 \times m$ first side surfaces, the two first side surfaces being parallel to each other,

the second optical part (14) has a third surface (14a) and a fourth surface (14b) crossing the second rotational axis (C2), and $2 \times n$ (n is a natural number no smaller than 2) second side surfaces (14c1, 14c2, 14c3, 14c4) having contact with the third surface and the fourth surface, and

the second plane of incidence (14c1) and the second exit surface (14c3) are two of the 2×n second side surfaces, the two second side surfaces being parallel to each other.

4. The light source device (10) according to any one of Claims 1 to 3, wherein
at least one of the first optical part (13) and the second optical part (14) is formed of quartz.

5. The light source device (10) according to any one of Claims 1 to 4, wherein
the first light emitter (11) is a laser diode configured to emit a laser beam.

6. The light source device (10) according to any one of Claims 1 to 5, wherein
the first light beam is a green light beam (LG), the second light beam is a blue light beam (LB), and the third light beam is a red light beam (LR).

7. The light source device (10) according to any one of Claims 1 to 6, wherein
the second rotational axis (C2), the third rotational axis (C3), and the fourth rotational axis (C4) are located on a same axis.

8. The light source device (10) according to Claim 7, wherein
the second optical part (14), the third optical part (53), and the fourth optical part (54) are formed of one light transmissive member.

9. The light source device (10) according to any one of Claims 1 to 6, further comprising:

a light combining optical system (72) configured to combine the first light beam emitted from the first light emitter (47), the second light beam emitted from the second light emitter (48), and the third light beam emitted from the third light emitter (49) with each other, wherein
a composite light beam (LW) combined by the light combining optical system enters the first optical part (13), and the composite light beam emitted from the first optical part enters the second optical part (14).

10. The light source device (10) according to Claim 9, further comprising:
a light flux width adjustment optical system (73) configured to adjust a flux width of a light beam emitted from the second optical part (14).

11. The light source device (10) according to Claim 10, wherein
the flux width adjustment optical system (73) includes a light path bending element (92) configured to bend a light path of the light beam emitted from the second optical part (14).

12. A projector (20) comprising:

the light source device (10) according to any one of Claims 1 to 11;
a light modulation device (21) configured to modulate the light emitted from the light source device in accordance with image information; and
a projection optical device (23) configured to project the light modulated by the light modulation device.

13. The projector (20) according to Claim 12, wherein

the light modulation device (21) includes

a light modulation area (21c) configured to modulate the light beam entering the light modulation device, and emit the light beam modulated, and
a light blocking area (21d) which is located on a periphery of the light modulation area, and which is configured to block the light beam entering the light modulation device, and

an outer shape of an area scanned with the light beam emitted from the second optical part (14) corresponds to an outer shape of the light modulation area.

**Patentansprüche**

1. Lichtquellenvorrichtung (10), umfassend:

einen ersten Lichtemitter (11), der eingerichtet ist, einen ersten Lichtstrahl (L1) in einem ersten Wellenlängenband zu emittieren;

ein erstes optisches Teil (13), das drehbar gestützt wird und das eine erste Einfallsebene (13c1), in die der erste Lichtstrahl, der von dem ersten Lichtemitter emittiert wird, eintritt, und eine erste Austrittsfläche (13c3) aufweist, aus der der erste Lichtstrahl, der in das erste optische Teil durch die erste Einfallsebene eintritt, emittiert wird; und

ein zweites optisches Teil (14), das drehbar gestützt wird und das eine zweite Einfallsebene (14c1), in die der erste Lichtstrahl, der von dem ersten optischen Teil emittiert wird, eintritt, und eine zweite Austrittsfläche (14c3) aufweist, aus der der erste Lichtstrahl, der in das zweite optische Teil durch die zweite Einfallsebene eintritt, emittiert wird, wobei

das erste Licht durch das erste optische Teil und das zweite optische Teil geht,

das erste optische Teil eingerichtet ist, zentriert auf einer ersten Drehachse (C1) zu drehen, die sich entlang einer zweiten Richtung erstreckt, die eine erste Richtung als eine Einfallsrichtung des ersten Lichtstrahls in Bezug auf das erste optische Teil schneidet,

das zweite optische Teil eingerichtet ist, zentriert auf einer zweiten Drehachse (C2) zu drehen, die sich entlang einer dritten Richtung erstreckt, die die erste Richtung und die zweite Richtung schneidet,

die erste Einfallsebene und die erste Austrittsfläche parallel zueinander sind und

die zweite Einfallsebene und die zweite Austrittsfläche parallel zueinander sind,

die Lichtquelle ferner umfasst:

einen zweiten Lichtemitter (48), der eingerichtet ist, einen zweiten Lichtstrahl (LB) in einem zweiten Wellenlängenband zu emittieren, das sich von dem ersten Wellenlängenband unterscheidet; und

einen dritten Lichtemitter (49), der eingerichtet ist, einen dritten Lichtstrahl (LR) in einem dritten Wellenlängenband zu emittieren, das sich von dem ersten Wellenlängenband und dem zweiten Wellenlängenband unterscheidet, wobei

der erste Lichtstrahl, der von dem ersten Lichtemitter (11) emittiert wird, der zweite Lichtstrahl, der von dem zweiten Lichtemitter emittiert wird, und der dritte Lichtstrahl, der von dem dritten Lichtemitter emittiert wird, in das erste optische Teil (13) eintreten,

**dadurch gekennzeichnet, dass** die Lichtquellenvorrichtung ferner umfasst:

ein erstes wellenlängenselektives reflektierendes Element (52), das eingerichtet ist, den zweiten Lichtstrahl (LB) zu reflektieren und den dritten Lichtstrahl (LR) durchzulassen;

ein zweites wellenlängenselektives reflektierendes Element (51), das eingerichtet ist, den zweiten Lichtstrahl durchzulassen und den dritten Lichtstrahl zu reflektieren;

ein drittes optisches Teil (53), das drehbar gestützt wird und das eine dritte Einfallsebene (53c1), in die der zweite Lichtstrahl eintritt, und eine dritte Austrittsfläche (53c3) aufweist, aus der der zweite Lichtstrahl, der in das dritte optische Teil durch die dritte Einfallsebene eintritt, emittiert wird; und

ein viertes optisches Teil (54), das drehbar gestützt wird und das eine vierte Einfallsebene (54c1), in die der dritte Lichtstrahl eintritt, und eine vierte Austrittsfläche (54c3) aufweist, aus der der dritte Lichtstrahl, der in das vierte optische Teil durch die vierte Einfallsebene eintritt, emittiert wird, wobei

das erste wellenlängenselektive reflektierende Element auf einem Lichtweg des dritten Lichtstrahls, der von dem dritten Lichtemitter (49) emittiert wird, zwischen dem dritten Lichtemitter und dem ersten optischen Teil (13) angeordnet ist,

das zweite wellenlängenselektive reflektierende Element auf einem Lichtweg des zweiten Lichtstrahls, der von dem zweiten Lichtemitter (48) emittiert wird, zwischen dem zweiten Lichtemitter und dem ersten optischen Teil angeordnet ist,

das dritte optische Teil eingerichtet ist, zentriert auf einer dritten Drehachse (C3) zu drehen, die sich entlang der dritten Richtung erstreckt,

das vierte optische Teil (54) eingerichtet ist, zentriert auf einer vierten Drehachse (C4) zu drehen, die sich entlang der dritten Richtung erstreckt,

die dritte Einfallsebene (53c1) und die dritte Austrittsfläche (53c3) parallel zueinander sind,

die vierte Einfallsebene (54c1) und die vierte Austrittsfläche (54c3) parallel zueinander sind,

der zweite Lichtstrahl, der von dem ersten optischen Teil emittiert wird und von dem ersten wellenlängenselektiven reflektierenden Element (52) reflektiert wird, in das dritte optische Teil eintritt, und

der dritte Lichtstrahl, der von dem ersten optischen Teil emittiert wird und von dem zweiten wellenlängenselektiven reflektierenden Element reflektiert wird, in das vierte optische Teil eintritt.

2. Lichtquellenvorrichtung (10) nach Anspruch 1, wobei

das erste optische Teil (13) eingerichtet ist, zentriert auf der ersten Drehachse (C1) zu drehen, um dadurch Abtasten mit dem ersten Lichtstrahl, der von dem ersten Lichtemitter (11) emittiert wird, in einer ersten Abtastrichtung durchzuführen,
das zweite optische Teil (14) eingerichtet ist, zentriert auf der zweiten Drehachse (C2) zu drehen, um dadurch Abtasten mit dem ersten Lichtstrahl, der von dem ersten optischen Teil emittiert wird, in einer zweiten Abtastrichtung durchzuführen, die die erste Abtastrichtung schneidet, und
zweidimensionales Abtasten mit dem ersten Lichtstrahl durch das erste optische Teil und das zweite optische Teil erreicht wird.

3. Lichtquellenvorrichtung (10) nach Anspruch 1 oder 2, wobei

das erste optische Teil (13) eine erste Oberfläche (13a) und eine zweite Oberfläche (13b) aufweist, die die erste Drehachse (C1) schneiden, und 2×m (m ist eine natürliche Zahl nicht kleiner als 2) erste Seitenflächen (13c1, 13c2, 13c3, 13c4) Kontakt mit der ersten Oberfläche und der zweiten Oberfläche haben,
die erste Einfallsebene (13c1) und die erste Austrittsfläche (13c3) zwei der 2×m ersten Seitenflächen sind, wobei die zwei ersten Seitenflächen parallel zueinander sind,
das zweite optische Teil (14) eine dritte Oberfläche (14a) und eine vierte Oberfläche (14b) aufweist, die die zweite Drehachse schneiden, und 2×n (n ist eine natürliche Zahl nicht kleiner als 2) zweite Seitenflächen (14c1, 14c2, 14c3, 14c4) sind, die Kontakt mit der dritten Oberfläche und der vierten Oberfläche haben, und
die zweite Einfallsebene (14c1) und die zweite Austrittsfläche (14c3) zwei der 2×n zweiten Seitenflächen sind, wobei die zwei zweiten Seitenflächen parallel zueinander sind.

4. Lichtquellenvorrichtung (10) nach einem der Ansprüche 1 bis 3, wobei
zumindest eines des ersten optischen Teils (13) und des zweiten optischen Teils (14) aus Quarz gebildet ist.

5. Lichtquellenvorrichtung (10) nach einem der Ansprüche 1 bis 4, wobei
der erste Lichtemitter (11) eine Laserdiode ist, die eingerichtet ist, einen Laserstrahl zu emittieren.

6. Lichtquellenvorrichtung (10) nach einem der Ansprüche 1 bis 5, wobei
der erste Lichtstrahl ein grüner Lichtstrahl (LG) ist, der zweite Lichtstrahl ein blauer Lichtstrahl (LB) ist und der dritte Lichtstrahl ein roter Lichtstrahl (LR) ist.

7. Lichtquellenvorrichtung (10) nach einem der Ansprüche 1 bis 6, wobei
sich die zweite Drehachse (C2), die dritte Drehachse (C3) und die vierte Drehachse (C4) auf einer selben Achse befinden.

8. Lichtquellenvorrichtung (10) nach Anspruch 7, wobei
das zweite optische Teil (14), das dritte optische Teil (53) und das vierte optische Teil (54) aus einem lichtdurchlässigen Element gebildet sind.

9. Lichtquellenvorrichtung (10) nach einem der Ansprüche 1 bis 6, ferner umfassend:

ein lichtkombinierendes optisches System (72), das eingerichtet ist, den ersten Lichtstrahl, der von dem ersten Lichtemitter (47) emittiert wird, den zweiten Lichtstrahl, der von dem zweiten Lichtemitter (48) emittiert wird, und den dritten Lichtstrahl, der von dem dritten Lichtemitter (49) emittiert wird, miteinander zu kombinieren, wobei ein zusammengesetzter Lichtstrahl (LW), der von dem lichtkombinierenden optischen System kombiniert wird, in das erste optische Teil (13) eintritt, und
der zusammengesetzte Lichtstrahl, der von dem ersten optischen Teil emittiert wird, in das zweite optische Teil (14) eintritt.

10. Lichtquellenvorrichtung (10) nach Anspruch 9, ferner umfassend:
ein optisches Lichtstrombreiten-Anpassungssystem (73), das eingerichtet ist, eine Strombreite eines Lichtstrahls anzupassen, der von dem zweiten optischen Teil (14) emittiert wird.

**11.** Lichtquellenvorrichtung (10) nach Anspruch 10, wobei
das optische Lichtstrombreiten-Anpassungssystem (73) ein Lichtwegbiegungselement (92) enthält, das eingerichtet ist, einen Lichtweg des Lichtstrahls zu biegen, der von dem zweiten optischen Teil (14) emittiert wird.

**12.** Projektor (20), umfassend:

die Lichtquellenvorrichtung (10) nach einem der Ansprüche 1 bis 11;
eine Lichtmodulationsvorrichtung (21), die eingerichtet ist, das Licht, das von der Lichtquellenvorrichtung emittiert wird, in Übereinstimmung mit Bildinformationen zu modulieren; und
eine optische Projektionsvorrichtung (23), die eingerichtet ist, das Licht, das von der Lichtmodulationsvorrichtung moduliert wird, zu projizieren.

**13.** Projektor (20) nach Anspruch 12, wobei

die Lichtmodulationsvorrichtung (21) enthält
einen Lichtmodulationsbereich (21c), der eingerichtet ist, den Lichtstrahl, der in die Lichtmodulationsvorrichtung eintritt, zu modulieren und den modulierten Lichtstrahl zu emittieren, und
einen Lichtblockierungsbereich (21d), der sich an einer Peripherie des Lichtmodulationsbereichs befindet und der eingerichtet ist, den Lichtstrahl, der in die Lichtmodulationsvorrichtung eintritt, zu blockieren, und
eine Außenform eines Bereichs, der mit dem Lichtstrahl abgetastet wird, der von dem zweiten optischen Teil (14) emittiert wird, einer Außenform des Lichtmodulationsbereichs entspricht.


**Revendications**

**1.** Dispositif de source de lumière (10) comprenant :

un premier émetteur de lumière (11) configuré pour émettre un premier faisceau lumineux (L1) dans une première bande de longueur d'onde ;
une première partie optique (13) supportée de façon rotative, et laquelle comporte un premier plan d'incidence (13c1) dans lequel pénètre le premier faisceau lumineux émis à partir du premier émetteur de lumière, et une première surface de sortie (13c3) à partir de laquelle est émis le premier faisceau lumineux pénétrant dans la première partie optique à travers le premier plan d'incidence ; et
une deuxième partie optique (14) supportée de façon rotative, et laquelle comporte un deuxième plan d'incidence (14c1) dans lequel pénètre le premier faisceau lumineux émis à partir de la première partie optique, et une deuxième surface de sortie (14c3) à partir de laquelle est émis le premier faisceau lumineux pénétrant dans la deuxième partie optique à travers le deuxième plan d'incidence, dans lequel
la première lumière traverse la première partie optique et la deuxième partie optique,
la première partie optique est configurée pour tourner autour d'un premier axe de rotation (C1) s'étendant le long d'une deuxième direction coupant une première direction comme direction d'incidence du premier faisceau lumineux par rapport à la première partie optique,
la deuxième partie optique est configurée pour tourner autour d'un deuxième axe de rotation (C2) s'étendant le long d'une troisième direction coupant la première direction et la deuxième direction,
le premier plan d'incidence et la première surface de sortie sont parallèles l'un à l'autre, et
le deuxième plan d'incidence et la deuxième surface de sortie sont parallèles l'un à l'autre,
le dispositif de source de lumière comprenant en outre :

un deuxième émetteur de lumière (48) configuré pour émettre un deuxième faisceau lumineux (LB) dans une deuxième bande de longueur d'onde différente de la première bande de longueur d'onde ; et
un troisième émetteur de lumière (49) configuré pour émettre un troisième faisceau lumineux (LR) dans une troisième bande de longueur d'onde différente de la première bande de longueur d'onde et de la deuxième bande de longueur d'onde, dans lequel
le premier faisceau lumineux émis à partir du premier émetteur de lumière (11), le deuxième faisceau lumineux émis à partir du deuxième émetteur de lumière et le troisième faisceau lumineux émis à partir du troisième émetteur de lumière pénètrent dans la première partie optique (13),
**caractérisé en ce que** le dispositif de source de lumière comprend en outre :

un premier élément réfléchissant sélectif en longueur d'onde (52) configuré réfléchir le deuxième faisceau lumineux (LB) et pour transmettre le troisième faisceau lumineux (LR) ;

un deuxième élément réfléchissant sélectif en longueur d'onde (51) configuré pour transmettre le deuxième faisceau lumineux et pour réfléchir le troisième faisceau lumineux ;

une troisième partie optique (53) supportée de façon rotative, et laquelle comporte un troisième plan d'incidence (53c1) dans lequel pénètre le deuxième faisceau lumineux, et une troisième surface de sortie (53c3) à partir de laquelle est émis le deuxième faisceau lumineux pénétrant dans la troisième partie optique à travers le troisième plan d'incidence ; et

une quatrième partie optique (54) supportée de façon rotative, et laquelle comporte un quatrième plan d'incidence (54c1) dans lequel pénètre le troisième faisceau lumineux, et une quatrième surface de sortie (54c3) à partir de laquelle est émis le troisième faisceau lumineux pénétrant dans la quatrième partie optique à travers le quatrième plan d'incidence, dans lequel

le premier élément réfléchissant sélectif en longueur d'onde est disposé sur un trajet de lumière du troisième faisceau lumineux émis à partir du troisième émetteur de lumière (49) entre le troisième émetteur de lumière et la première partie optique (13),

le deuxième élément réfléchissant sélectif en longueur d'onde est disposé sur un trajet de lumière du deuxième faisceau lumineux émis à partir du deuxième émetteur de lumière (48) entre le deuxième émetteur de lumière et la première partie optique,

la troisième partie optique est configurée pour tourner autour d'un troisième axe de rotation (C3) s'étendant le long de la troisième direction,

la quatrième partie optique (54) est configurée pour tourner autour d'un quatrième axe de rotation (C4) s'étendant le long de la troisième direction,

le troisième plan d'incidence (53c1) et la troisième surface de sortie (53c3) sont parallèles l'un à l'autre,

le quatrième plan d'incidence (54c1) et la quatrième surface de sortie (54c3) sont parallèles l'un à l'autre,

le deuxième faisceau lumineux émis à partir de la première partie optique et réfléchi par le premier élément réfléchissant sélectif en longueur d'onde (52) pénètre dans la troisième partie optique, et

le troisième faisceau lumineux émis à partir de la première partie optique et réfléchi par le deuxième élément réfléchissant sélectif en longueur d'onde pénètre dans la quatrième partie optique.

2. Dispositif de source de lumière (10) selon la revendication 1, dans lequel

la première partie optique (13) est configurée pour tourner autour du premier axe de rotation (C1) pour ainsi effectuer un balayage avec le premier faisceau lumineux émis à partir du premier émetteur de lumière (11) dans une première direction de balayage,

la deuxième partie optique (14) est configurée pour tourner autour du deuxième axe de rotation (C2) pour ainsi effectuer un balayage avec le premier faisceau lumineux émis à partir de la première partie optique dans une deuxième direction de balayage coupant la première direction de balayage, et

un balayage bidimensionnel avec le premier faisceau lumineux est réalisé par la première partie optique et la deuxième partie optique.

3. Dispositif de source de lumière (10) selon les revendications 1 ou 2, dans lequel

la première partie optique (13) comporte une première surface (13a) et une deuxième surface (13b) croisant le premier axe de rotation (C1), et 2×m (m étant un nombre naturel pas plus petit que 2) premières surfaces latérales (13c1, 13c2, 13c3, 13c4) en contact avec la première surface et la deuxième surface,

le premier plan d'incidence (13c1) et la première surface de sortie (13c3) sont deux des 2xm premières surfaces latérales, les deux premières surfaces latérales étant parallèles l'une à l'autre,

la deuxième partie optique (14) comporte une troisième surface (14a) et une quatrième surface (14b) croisant le deuxième axe de rotation (C2), et 2×n (n étant un nombre naturel pas plus petit que 2) deuxièmes surfaces latérales (14c1, 14c2, 14c3, 14c4) en contact avec la troisième surface et la quatrième surface, et

le deuxième plan d'incidence (14c1) et la deuxième surface de sortie (14c3) sont deux des 2×n deuxièmes surfaces latérales, les deux deuxièmes surfaces latérales étant parallèles l'une à l'autre.

4. Dispositif de source de lumière (10) selon l'une quelconque des revendications 1 à 3, dans lequel au moins l'une parmi la première partie optique (13) et la deuxième partie optique (14) est constituée de quartz.

5. Dispositif de source de lumière (10) selon l'une quelconque des revendications 1 à 4, dans lequel le premier émetteur de lumière (11) est une diode laser configurée pour émettre un faisceau laser.

6. Dispositif de source de lumière (10) selon l'une quelconque des revendications 1 à 5, dans lequel le premier faisceau lumineux est un faisceau lumineux vert (LG), le deuxième faisceau lumineux est un faisceau lumineux bleu (LB) et le troisième faisceau lumineux est un faisceau lumineux rouge (LR).

7. Dispositif de source de lumière (10) selon l'une quelconque des revendications 1 à 6, dans lequel le deuxième axe de rotation (C2), le troisième axe de rotation (C3) et le quatrième axe de rotation (C4) se situent sur un même axe.

8. Dispositif de source de lumière (10) selon la revendication 7, dans lequel la deuxième partie optique (14), la troisième partie optique (53) et la quatrième partie optique (54) sont constituées d'un élément transmetteur de lumière.

9. Dispositif de source de lumière (10) selon l'une quelconque des revendications 1 à 6, comprenant en outre :

   un système optique de combinaison de lumière (72) configuré pour combiner le premier faisceau lumineux émis à partir du premier émetteur de lumière (47), le deuxième faisceau lumineux émis à partir du deuxième émetteur de lumière (48), et le troisième faisceau lumineux émis à partir du troisième émetteur de lumière (49) entre eux, dans lequel
   un faisceau lumineux composite (LW) combiné par le système optique de combinaison de lumière pénètre dans la première partie optique (13), et
   le faisceau lumineux composite émis à partir de la première partie optique pénètre dans la deuxième partie optique (14).

10. Dispositif de source de lumière (10) selon la revendication 9, comprenant en outre : un système optique de réglage de largeur de flux lumineux (73) configuré pour régler une largeur de flux d'un faisceau lumineux émis à partir de la deuxième partie optique (14).

11. Dispositif de source de lumière (10) selon la revendication 10, dans lequel le système optique de réglage de largeur de flux lumineux (73) inclut un élément de flexion de trajet de lumière (92) configuré pour fléchir un trajet de lumière du faisceau lumineux émis à partir de la deuxième partie optique (14).

12. Projecteur (20) comprenant :

   un dispositif de source de lumière (10) selon l'une quelconque des revendications 1 à 11 ;
   un dispositif de modulation de lumière (21) configuré pour moduler la lumière émise à partir du dispositif de source de lumière en fonction d'informations d'image ; et
   un dispositif optique de projection (23) configuré pour projeter la lumière modulée par le dispositif de modulation de lumière.

13. Projecteur (20) selon la revendication 12, dans lequel

   le dispositif de modulation de lumière (21) inclut
   une zone de modulation de lumière (21c) configurée pour moduler le faisceau lumineux pénétrant dans le dispositif de modulation de lumière, et pour émettre le faisceau lumineux modulé, et
   une zone de blocage de lumière (21d) située sur une périphérie de la zone de modulation de lumière et configurée pour bloquer le faisceau lumineux pénétrant dans le dispositif de modulation de lumière, et
   une forme extérieure d'une zone balayée avec le faisceau lumineux émis à partir de la deuxième partie optique (14) correspond à une forme extérieure de la zone de modulation de lumière.

## FIG. 1

## FIG. 2A

*FIG. 2B*

*FIG. 2C*

*FIG. 2D*

*FIG. 2E*

*FIG. 2F*

*FIG. 3*

EP 4 432 653 B1

## FIG. 4A

FIG. 4B

FIG. 4C

FIG. 4D

EP 4 432 653 B1

## FIG. 4E

EP 4 432 653 B1

*FIG. 5*

*FIG. 6*

*FIG. 7A*

FIG. 7B

FIG. 8A

FIG. 8B

*FIG. 8C*

*FIG. 9A*

*FIG. 9B*

## FIG. 10

## FIG. 11

FIG. 12A

FIG. 12B

FIG. 12C

FIG. 12D

# FIG. 13

PROPAGATION DISTANCE

ILLUMINATION
TARGET SURFACE
POSITION

LIGHT SOURCE
POSITION

## FIG. 14

## FIG. 15

FIG. 16

## FIG. 17

# FIG. 18

**EP 4 432 653 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007225956 A
- US 2222937 A
- GB 784144 A
- WO 2009007901 A2
- US 2007252918 A1
- US 2016334637 A1